# EUROPEAN PATENT APPLICATION

(11) **EP 2 107 782 A1**
(43) Date of publication of application: **07.10.2009**
(21) Application number: 07860382.6
(22) Date of filing: 27.12.2007
(51) Int. Cl.: H04N 1/00, B41J 29/00, B41J 29/38, H04L 9/08, H04N 1/387

(54) **PRINTING MEDIUM, IMAGE FORMING DEVICE, IMAGE INFORMATION INPUT DEVICE AND DIGITAL MULTIFUNCTION DEVICE**

(30) Priority: 27.12.2006 JP 2006351263
(71) Applicant: Panasonic Corporation, Kadoma-shi Osaka 571-8501 (JP)
(72) Inventor: MIYASO, Hiroaki, Osaka 540-6207 (JP)
(74) Representative: Meldrum, David James
(86) International application number: PCT/JP2007/075160
(87) International publication number: WO 2008/081886

(57) **Abstract**

A printed sheet can be treated safely and conveniently in accordance with the degree of its content confidentiality as to secret information limited to distribution, duplication, etc. and non-confidential information. A sheet is provided with an IC tag and further machine identifiably expressed pattern information is added and printed as a key necessary to access the information stored at the IC tag to be a printed sheet. Thus, the secret information can be conveniently distributed together with information disclosed by printing while being kept safely in the IC tag, and cannot be accessed unless the printed sheet is available. Further, since the expressed pattern information is made to have an access level to secret information, the access to secret information can be set in accordance with the degree of confidentiality.

## Description

The present invention relates to a digital copy machine or digital multifunction device for duplicating figures/photographs on an original document sheet onto another sheet, an image forming device (a printing device or a printer) for printing a visible image on a printing sheet (a recording sheet) based on input image information and other information, and an image information input device (an image scanner or simply a scanner) for reading the figures/photographs on the sheet as an image, generating image data thereof, and supplying the image data to an information processing device.

Along with widespread use of computers, copy machines, which duplicate images of figures/photographs on an original document that is a recoding medium such as a paper, film, or the like (simply referred as a sheet) onto another sheet, have been integrated with printing function and facsimile function to constitute digital multifunctional devices. Such printing devices are provided with interfaces to information exchange media such as memory cards and external devices, and control information for the printing device can be uploaded or replaced using an information exchange medium or external device, so that the device operability can be improved.

The digital copy machine described in the Patent literature 1 can store image data of a read original image in a memory card. This is a new application of memory cards as an alternative medium to the paper. Nowadays, the Internet is popularized and portable information devices such as cell phones and digital cameras are owned personally and widely used. Various types of information such as music, images, and videos are digitalized as well as text, and so-called multimedia is extensively available on various scenes in our daily life. The users can obtain not only information right in front of them but also various types of information throughout the world through the display screen or the sound output of the information device. The memory cards are useful as a medium for such various types of digital information, or so-called multimedia.

On the other hand, the paper is a very convenient medium to visually convey information to others in a direct manner. In such a usage, the memory card still cannot replace the paper. For this reason, both the memory card and the paper will be in continuous use in the future in their suitable forms.

In such circumstances, integrated circuit (IC) cards carrying a small IC memory chip for non-contact data exchange are widely used in these years. Besides the card form, the small IC memory chip itself is attached to various objects seen in our daily life in the form of a wireless IC tag.

As for the printing paper, with recent increased interest in information security, for example the Patent Literature 2 discloses a printing medium having a built-in non-contact type ultra-small IC chip that is a wireless IC tag and saves anticounterfeit information as an anticounterfeit measure.

Furthermore, for example, the Patent Literature 3 discloses a recording medium such as paper having a radio frequency (RF) identifier (ID) tag that is a wireless IC tag. Non-electronic information such as text, photographs, and drawings is printed on the recording medium and, additionally, video images and sounds can be recorded in the RFID tag as secondary information, whereby the paper-based recording medium can record with video images and sounds and highly concentrated information transfer can be carried out.

Furthermore, for example, the Patent Literature 4 discloses a device or system using a printing paper provided with a wireless IC tag, in which when print is made on the printing paper with a RFID tag that is the wireless IC tag, the printing information is saved in the RFID tag or in a database communicable with the RFID tag via a network, and distribution information is added to the RFID tag or database when the printed matter is distributed, whereby the printed matter can be searched based on the printing information or distribution information.

Furthermore, for example, the Patent Literature 5 discloses a document management system in which when a document is printed on a printing paper with an embedded wireless tag that is a wireless IC tag, the printed document data is stored in association with the wireless tag and, when the printed document is photocopied, the read content of the wireless tag and the stored data are compared to control the copy inhibit and to manage the distribution addressees.

Furthermore, for example, the Patent Literature 6 discloses an image forming device for duplicating an original that is a paper document having an RFID chip that is a wireless IC tag, wherein the additional information recorded in the RFID is read first at reading the original and the original is duplicated only when the additional information satisfies conditions necessary to allow the duplication
Patent Literature 1: Japanese Laid-Open Patent Application Publication No. 2004-72762;
Patent literature 2: Japanese Laid-Open Patent Application Publication No. 2003-58856;
Patent literature 3: Japanese Laid-Open Patent Application Publication No.2006-103109;
Patent literature 4: Japanese Laid-Open Patent Application Publication No. 2004-310239;
Patent literature 5: Japanese Laid-Open Patent Application Publication No. 2005-35095; and
Patent literature 6: Japanese Laid-Open Patent Application Publication No. 2005-305662.

However, the Patent Literature 2 of the conventional structure only discloses a technique to prove that the printed medium is not a counterfeit using the ultra-small IC chip carried by the medium. Here, the function of the ultra-small IC chip is not used by the user of the printed medium.

In the Patent Literature 3, the RFID tag carried by the recording medium on which non-electronic information is printed can convey video images and sounds that are electronic information and secondary information to the printed information; that is all. The Literature discloses no further technique to treat the secondary information as classified information (information disclosed and conveyed to only a specific party). The structure itself has no capacity to effectively treat classified information.

In the system disclosed in the Patent Literature 4 or 5 and the device disclosed in the Patent Literature 5, which have the conventional structure using a paper carrying a wireless IC tag, the wireless IC tag is used as a memory only to inhibit or restrict duplication of the information recorded in the form of figures/photographs on the paper carrying the IC tag or to manage the recorded information (printed information/distribution information).

In other words, the technique disclosed in the Patent Literature 4 is used for search based on the printed information and distribution information recorded in the RFID tag and intended for search/management of the printed matter.

In the techniques disclosed in the Patent Literatures 5 and 6, primary information to someone is present in the figures/photographs on paper, and the capability of the wireless IC tag is utilized when the information is classified information and the distribution/duplication of the information should be restricted. In other words, even if classified, the information appears in the figures/photographs on paper. When the copy machine does not have a function to follow the information regarding the restriction on distribution/duplication stored in the wireless IC tag, such restriction is ignored and the classified figures/photographs on paper are easily duplicated. Then, the expected effect is not obtained. As a matter of practice, this happens in most cases. The techniques disclosed in the Patent Literatures 5 and 6 cannot be used as a means for keeping classified information confidential.

The memory card in which information is recorded, as shown in the Patent Literature 1, assures confidentiality by encrypting the recorded data. However, since the memory card does not convey the information visually to a person and physically different from the paper, the primary user having the right to access the information cannot use it like the paper.

The present invention has a purpose to resolve the above conventional problems and provides an image forming device, image information input device, and digital multifunction device using a very simple medium such as paper carrying a wireless IC tag for handling classified information of which distribution/duplication is restricted and unclassified information according to the confidential level of the information in a secure and convenient manner.

In order to achieve the above purpose, the present invention provides a printing medium that is a paper, film, or the like and on which print is made, comprises an ultra-small integrated circuit (IC) tag storing information, wherein the print includes a pattern having a machine-identifiable format to present access information that is the key information necessary for accessing the IC tag for the stored information.

An image forming device printing a visible image based on input image information and other information on a printing paper, film, or other medium comprises a printing unit for forming and printing a visible image on the printing medium; and an IC tag reader for establishing data communication with an ultra-small integrated circuit (IC) tag carried by the printing medium and storing information for exchanging storing information or information stored in the IC tag and other tag information, wherein a pattern having a machine-identifiable format to present access information that is the key information necessary for accessing the IC tag for the stored information is printed on the medium carrying the IC tag to superimpose the pattern on the image based on input image information, and the storing information is stored in the IC tag.

An image information input device reading the figures/photographs on a paper, film, or other medium as an image, generating image data thereof, and supplying the data to an information processing device comprises an image scanner for capturing an image of the medium and directly reading the figures/photographs recorded thereon as an image; and an IC tag reader for establishing data communication with an IC tag carried by the printing medium and storing information for exchanging storing information or information stored in the IC tag and other tag information, wherein the IC tag carried by the medium is detected, the pattern having a specific machine-identifiable format is extracted from the image of the figures/photographs on the medium that is captured by the image scanner, the pattern is identified to obtain key information, and the stored information in the IC tag is accessed based on the key information.

A digital multifunction device having an output function to print and output a visible image based on input image information and other information on a printing paper, film, or other medium and an image information input function to read the figures/photographs recorded on a medium as an image and generate image data thereof for input comprises a printing unit for forming and printing a visible image on the printing medium; an image scanner for capturing an image of the medium and directly reading the figures/photographs recorded thereon as an image; and an IC tag reader for establishing data communication with an IC tag carried by the printing medium and storing information for exchanging storing information or information stored in the IC tag and other information, wherein a pattern having a machine-identifiable format to present access information that is the key information necessary for accessing the IC tag for the stored information is printed on the medium carrying the IC tag to superimpose the pattern on the image based on image information and the storing information is stored in the IC tag during the printing of an image based on input image information, and the IC tag carried by the medium is detected, the pattern having a machine-identifiable format is extracted from the image of the figures/photographs on the medium that is captured by the image scanner, the pattern is identified to obtain key information, and the stored information in the IC tag is accessed based on the key information during the reading of the figures/photographs on a medium.

The printing medium such as paper carrying an IC tag of the present invention has unclassified information (termed the disclosed information for convenience) recorded on the surface as print and classified information recorded (stored) in the IC tag, which eliminates the necessity of other means for providing the classified information such as flexible discs and file servers, whereby the classified information is secured in the IC tag and distributed together with the disclosed information. Furthermore, the print on the surface includes a pattern having a machine-identifiable format to present key information necessary for accessing the stored information in the IC tag. Then, the classified information and disclosed information are more securely integrated and more easily stored/used. No one can access the classified information unless he/she actually has the printed matter (printed medium). In this way, the classified information in the IC tag is prevented from being separated from the printed medium and leaked by itself, increasing the security of the classified information.

More specifically, it is generally inconvenient to manage and handle the entities of related pieces of information that are physically separated. For example, when related pieces of information are recorded on paper in part (for example image information) and in a memory card in part (for example classified information), their relationship should additionally be managed and such management often causes human errors. The entity of classified information can be stored in a file server to access it thorough networks. In such a measure, the entity of classified information may not be accessed where no online environment is established. Such a measure is not convenient to the user. Conversely, in the present invention, the entities of information are integrated whether or not information is classified. In other words, classified information and access information thereto is recorded together on a single matter. Related pieces of information are not separated. Furthermore, no file server is required to print the classified information for use. The user can easily manage and handle the information. The distributor of the information does not need to keep managing the classified information on the server after the distribution.

The classified information itself is recorded in the IC tag (medium), ensuring that the information is recorded/distributed with a high level of security against leakage and alteration. The key information necessary for accessing the classified information recorded in the IC tag is recorded (printed) as an image. Therefore, the content of the classified information cannot be accessed simply by reading and electrically duplicating the electronic information regarding classified information to be recorded in the IC tag using an IC tag reader exchanging the stored information in the IC tag and other tag information (and also writing information in the tag), making the access to the classified information more difficult. More specifically, for providing classified information, information data regarding the access to the classified information is included on the surface of the printed sheet as a so-called watermark image generally invisible for data secrecy. The classified information stored in the IC tag cannot be read when by any chance the IC tag is removed from the printed sheet and used separately, ensuring the integrity of the classified information and printed sheet.

Keeping the access information format specification generally secret, the access information is sort of encrypted, increasing the confidentiality security. If the image in which the access information is recorded is difficult to optically duplicate, spreading of the access information by duplication is prevented.

For example, a fine yellow pattern presenting a so-called password (data) for reading the classified information stored in the IC tag is superimposed on the image of the printed sheet as a watermark image. A machine is used to read and decrypt the watermark image (password) and the decrypted password is given to the IC tag so that the classified information stored in the IC tag can be read. Conversely, when the IC tag is removed from the printed sheet and there is no password available from the watermark image, the classified information cannot be read from the IC tag. In this way, with the data regarding the controlled information being included on the printed sheet as a watermark image, the security of the classified information in the IC tag is increased and the integrity of the classified information and printed sheet is ensured, preventing mistakes in management/usage.

In other words, in the printed matter according to the present invention, even classified information is actually recorded, which is convenient to the user. The classified information is electronically recorded and not duplicated by a conventional copy machine. The access information is given in the form of an image and recorded on the printed matter. Any device simply having an IC tag reader cannot duplicate the necessary information, preventing the leakage.

In this way, one printed matter includes disclosed information and related classified information and it is difficult to access the classified information except for the person who has the original of the printed matter. In this way, the entity of classified information can be distributed in a secure and convenient manner.

Furthermore, the image forming device of the present invention stores classified information in an IC tag and prints a pattern having a machine-identifiable format to present the corresponding access information on the sheet carrying the IC tag to superimpose the pattern on the image based on input image information, whereby one printed matter includes disclosed information and related classified information and it is difficult to access the classified information except for the person who has the original of the printed matter, easily creating a printed matter that can distribute the entity of classified information in a secure and convenient manner.

Furthermore, the same effect as the above can be obtained by the image information input device of the present invention in which the IC tag carried by a printed matter is detected, a pattern having a specific format is extracted from an captured image of the figures/photographs on the sheet, the pattern is identified to obtain information, and the stored information in the IC tag is accessed based on the obtained information and by the digital multifunction device of the present invention that is a combination of the image information input device and image forming device by way of the aforementioned printed matter.
Fig.1 is a diagram of a printed face of a printed sheet according to the present invention on which print is made.
Fig.2 (a) is a diagram of a printing sheet carrying an IC tag according to the present invention and Fig.2 (b) is a schematic cross-sectional view of the part where the IC tag is provided.
Fig.3 is diagrams for explaining the geometry (dot position) of pattern prints. Fig.3(a) is a diagram showing patterns and information (value, character) presented by the patterns, and Fig.3(b) is a diagram showing a string of characters (numbers) presented by the patterns in Fig. 3(a).
Fig.4 is a data structure diagram for explaining the data structure of a pattern print. Fig.4 (a) shows the data structure of a pattern print and Fig.4(b) shows the structure of expression data of the pattern print.
Fig.5 is a schematic illustration showing the entire structure of an image forming device according to the present invention. Fig.5 (a) is a perspective rear view of the appearance and Fig.5(b) is a transverse cross-sectional view.
Fig.6 is a block diagram regarding the data-processing/device-control of the image forming device.
Fig.7 is a flowchart showing the basic-printing/recording-operation of the image forming apparatus.
Fig.8 is a diagram schematically showing input data to be inputted to the image forming device in a markup format when a document includes classified information.
Fig.9 is a cross-sectional view showing the entire structure of an image information input device according to the present invention.
Fig.10 is a block diagram regarding the data processing/device control of the image information input device.
Fig.11 is a diagram schematically showing an original (recording sheet) in an output data format outputted from the image information input device.
Fig.12 is a flowchart of the basic operation of the image information input device for reading image/stored information.
Fig.13 is a schematic front view of a cross-section of the digital multifunction device according to the present invention for explaining the configuration and structure thereof.
Fig.14 is a block diagram regarding the data processing/device control of the digital multifunction device.
Fig.15 is a diagram of the printed face of a printed sheet on which print including classified information is made.

In accordance with a first aspect of the present invention, a printing medium that is a paper, film, or the like, on a surface of which print is made. The medium carries an ultra-small integrated circuit (IC) tag storing information and the print includes a pattern having an identifiable format to present access information that is a key information necessary for accessing the stored information in the IC tag.

With the above structure, the printing medium such as paper carrying an IC tag has disclosed information recorded on the surface as print and classified information (including data such as characters, figures, photographs, documents, sounds, and video images) recorded in the IC tag, which eliminates the necessity of other means for providing classified information such as flexible discs and file servers, whereby the classified information is secured in the IC tag and distributed together with the disclosed information. Furthermore, the print on the surface includes a pattern having a machine-identifiable format to present the key information necessary for accessing the stored information in the IC tag. Then, the classified information and disclosed information are more securely integrated and more easily stored/used. No one can access the classified information except for the person who actually has the printed matter (printed medium). In this way, the classified information in the IC tag is prevented from being separated from the printed medium and leaked, and the security of the classified information is improved.

The recording sheet of the present invention records the entity of information together whether it is classified or not, in other words records classified information and access information thereto physically in one piece. Related pieces of information are not separated and no file server is required to print the classified information for use. The user can easily manage and handle the information. The distributor of the information does not need to keep managing the classified information on the server after the distribution.

The classified information itself can be recorded in the IC tag of the printing sheet, ensuring that the information is recorded and distributed with a high level of security against leakage and alteration. The key information necessary for accessing the classified information recorded in the IC tag is recorded (printed) as an image. Therefore, the content of the classified information to be recorded in the IC tag is modified to data that cannot be accessed simply, even in case of reading using an IC tag reader exchanging the stored information and other tag information in the IC tag (also simply referred as the "reader"; in this specification, the "reader" includes those capable of reading information from the tag and writing information in the tag, and the term "exchange" collectively means reading and writing), and electronically duplicating, thereby the access to the classified information is made more difficult. More specifically, for providing classified information, information data regarding the access to the classified information is included on the surface of the printed sheet as a so-called watermark image generally invisible for data secrecy. The classified information stored in the IC tag cannot be read when by any chance the IC tag is removed from the printed sheet and used separately, ensuring the integrity of the classified information and printed sheet.

A specification of the access information format generally is kept in secret in public, in other words, the access information is encrypted, so that the confidentiality security increases. If the image in which the access information is recorded is difficult to optically duplicate, spreading of the access information by duplication is prevented.

For example, a fine yellow pattern presenting a so-called password (data) for reading the classified information stored in the IC tag is superimposed on the image of the printed sheet as a watermark image. A machine is used to read and decrypt the watermark image (password) and the decrypted password is given to the IC tag so that the classified information stored in the IC tag can be read. Conversely, when the IC tag is removed from the printed sheet and there is no password available from the watermark image, the classified information cannot be read from the IC tag. In this way, with the data regarding the controlled information being included on the printed sheet as a watermark image, the security of the classified information in the IC tag is increased and the integrity of the classified information and printed sheet is ensured, preventing mistakes in management/usage.

In other words, in the printed matter of the present invention, even classified information is actually recorded, which is convenient to the user. The classified information is electronically recorded and not duplicated by a conventional copy machine. The access information is given in the form of an image and recorded on the printed matter. Any device simply having an IC tag reader cannot duplicate the necessary information, preventing the leakage. In this way, one printed matter includes disclosed information and related classified information, and it is difficult to access the classified information except for the person who has the original of the printed matter. In this way, the entity of classified information can be distributed in a secure and convenient manner.

In accordance with a second aspect of the present invention, the format presenting the access information in the first aspect is machine-identifiable but hard for a person to visually identify.

With the above structure, the format presenting the access information is machine-readable but hard for a person to visually identify, whereby it is difficult to identify where the access information is in the printed image so that the primary image based on input image information is printed without any practical loss and it is difficult to detect the access information and alter the presentation format, increasing the security of the classified information.

In accordance with a third aspect of the present invention, the IC tag in the first aspect is powered from an external device wirelessly and establishes data communication with an external device using electromagnetic induction or radio waves.

With the above structure, the IC tag is powered from an external device wirelessly and establishes data communication with an external device using electromagnetic induction or radio waves, whereby the IC tag itself does not need to have a power source such as a battery and establishes data communication for exchanging information with no mechanical contact.

In accordance with a fourth aspect of the present invention, an antenna is formed as a conductive ink drawing inside or on the surface of the medium in the third embodiment.

With the above structure, an antenna is formed as a conductive ink drawing inside or on the surface of the medium, whereby the antenna cost is reduced and a mechanical member is eliminated, improving reliability.

In accordance with a fifth aspect of the present invention, an image forming device for printing and outputting a visible image based on input image information and other information on a printing paper, film, or other medium (the medium is also simply termed the sheet, and the printing medium is also simply termed the sheet, printed sheet, or printed matter), the image forming device having a printing unit for forming and printing a visible image on the printing medium; and an IC tag reader for establishing data communication with an ultra-small integrated circuit (IC) tag carried by the printing medium and storing information for exchanging storing information or information stored in the IC tag and other tag information. The image forming device prints a pattern having a machine-identifiable format to present access information that is the key information necessary for accessing the stored information in the IC tag (in this specification, the pattern includes color and density; for example, patterns having the same shape but different colors are different patterns) on the medium carrying the IC tag to superimpose the pattern on the image based on input image information, and stores the storing information in the IC tag.

With the above structure, the image forming device of the present invention stores classified information in an IC tag and prints a pattern having a machine-identifiable format to present the corresponding access information on the sheet carrying the IC tag to superimpose the pattern on the image based on input image information, whereby regarding the disclosed information and related classified information printed on one printed matter, it is difficult for those who don't have the original of the printed matter to access the classified information, but it is easy for those who have the original to create the printed matter that can distribute the entity of classified information in a secure and convenient manner.

In accordance with a sixth aspect of the present invention, the pattern in the fifth aspect is machine-identifiable but hard for a person to visually identify.

With the above structure, the format presenting access information is machine-identifiable but hard for a person to visually identify, whereby it is difficult to identify where the access information is in the printed image so that the primary image based on input image information is printed without any practical loss, and it is difficult to detect the access information and alter the presentation format, increasing the security of the classified information.

In accordance with a seventh aspect of the present invention, the format in the sixth aspect has a fine geometry or an almost invisible color.

With the above structure, the pattern presenting access information has a fine geometry or an almost invisible color, whereby the format that is machine-identifiable but hard for a person to visually identify can easily be realized.

In accordance with a eighth aspect of the present invention, the pattern in the fifth aspect has the aforementioned format to present the access information encrypted, which is decrypted by specific key information.

With the above structure, the access information is presented by an encrypted code that is decrypted by the specific key information, whereby the access information itself has increased confidentiality security. Furthermore, multiple pieces of key information can be used to encrypt and decrypt differently for each key so that different levels of access right to the classified information can be provided to different distribution addressees of the printed matter. For example, key information **a** is given to an addressee **A** to allow him/her to access classified information α, key information **b** is given to an addressee **B** to allow him/her to access classified information α and β, and so on.

In accordance with a ninth aspect of the present invention, the stored information in the fifth aspect indicates information stored in a storage device external to the image forming device.

With the above structure, the stored information indicates information stored in a storage device such as a file server external to the image forming device, whereby a larger volume of information than the IC tag capacity can be provided to the user although an access means to the storage device is necessary. Here, in this aspect of the invention, in addition to the general security function of the IC tag, the access information necessary for accessing the IC tag is encrypted by way of an image (pattern) as described above, allowing the access to the file server through a more enhanced security measure.

In accordance with a tenth aspect of the present invention, among the information inputted to the device, the device in the fifth aspect stores in the IC tag the classified information itself to which access is limited or at least part of information based on the classified information.

With the above structure, among the information inputted to the device, the device stores in the IC tag the classified information itself to which access is limited or at least part of information based on the classified information, whereby a printed matter as information recorded matter in which among the information inputted to the device, unclassified information is printed on the medium (paper) as a visible image and classified information is recorded on the same medium (paper) in an invisible, and hardly accessible manner can be created.

In accordance with an eleventh aspect of the present invention, the IC tag reader in the fifth aspect can power the IC tag wirelessly and establish data communication with the IC tag.

With the above structure, the IC tag reader can power the IC tag wirelessly (for example, electromagnetic induction or radio waves) and establish data communication with the IC tag, whereby non-contact type IC tags such as wireless IC tags can be used.

In accordance with a twelfth aspect of the present invention, the device in the fifth aspect detects the IC tag on the medium on which the printing unit prints and, then, the IC tag reader identifies the detected IC tag, and stores the storing information or activates the stored information in the IC tag.

With the above structure, the device detects the IC tag on the medium on which the printing unit prints and, then, the IC tag reader identifies the detected IC tag and stores the storing information or activates the stored information in the IC tag, whereby even if multiple printed sheets are present within the communicable range of the non-contact type IC tag reader, a specific one printed sheet is selected and the storing information to be recorded there is stored in the IC tag, or the stored information is activated.

In accordance with a thirteenth aspect of the present invention, the device in the fifth aspect further comprises a paper ejection unit for ejecting the printed sheet or the printing medium on which print is made and detecting the ejection, and the device in the fifth aspect stores the storing information or activates the stored information in the IC tag after an image presenting the access information is printed, and the paper ejection unit detects the ejection of the printed sheet.

With the above structure, the device stores the storing information or activates the stored information in the IC tag after an image presenting the access information is printed and the paper ejection unit detects the ejection of the printed sheet, whereby when some printing failure such as paper jam occurs, no active information is present in the IC tag so as to prevent unnecessary writing of the classified information to be record in the IC tag and then prevent leakage of the classified information. For reprinting after printing failure such as stuck paper and paper jam in the image forming device, the data is reprinted only when incomplete printing or incomplete ejection of a printed sheet is detected and at least the data regarding classified information of the tag information is not activated. In this way, the reprinting is prevented in the case that a proper print is made. For example, in the case of printing a ticket, multiple tickets are not issued for a single charge. The image forming device ensures the only one print. This is particularly useful when tickets are issued at remote end user terminals connected to the host computer via communication lines.

In accordance with a fourteenth aspect of the present invention, during the printing, the device in the thirteenth aspect stores the storing information in the IC tag of the printed sheet by the time the printed sheet is ejected by the paper ejection unit, keeps the information stored inactivated until the printed sheet is ejected by the paper ejection unit, and activates the stored information after the ejection of the printed sheet by the paper ejection unit is detected.

With the above structure, during the printing, the device stores the storing information in the IC tag of the printed sheet by the time the printed sheet is ejected by the paper ejection unit, keeps the stored information inactivated until the printed sheet is ejected by the paper ejection unit, and activates the stored information after the ejection of the printed sheet by the paper ejection unit is detected, whereby a large volume of information can be stored in a relatively long time by the time the printed sheet is ejected by the paper ejection unit. Whether or not the stored information is activated can be indicated by a very small volume of information and controlled in a very short time after the paper ejection. There is no problem even if the user picks up the printed sheet immediately after the paper ejection.

In accordance with a fifteenth aspect of the present invention, the IC tag reader in the thirteenth aspect has a directional and other range limitation means for establishing a limited exchangeable range excluding at least the paper ejection unit.

With the above structure, the IC tag reader has a directional and other range limitation means for establishing a limited exchangeable range excluding at least the paper ejection unit, whereby a single wireless IC tag reader can be used to detect only the recording sheet present in the printing unit (in the process of printing) without detecting the printed sheet ejected by the paper ejection unit after the printing.

In accordance with a sixteenth aspect of the present invention, an image information input device for reading the figures/photographs on a paper, film, or other medium as an image, generating image data thereof, and supplying the data to an information processing device. The image information input device comprises an image sensor for capturing an image of the medium and directly reading the figures/photographs recorded thereon as an image; and an IC tag reader for establishing data communication with an ultra-small integrated circuit (IC) tag carried by the printing medium and storing information for exchanging storing information or information stored in the IC tag and other tag information, wherein the IC tag carried by the medium is detected, the pattern having a specific machine-identifiable format is extracted from the image of the figures/photographs on the medium that is captured by the image sensor, the pattern is identified to obtain key information, and the stored information in the IC tag is accessed based on the key information.

With the above structure, the IC tag carried by the medium (paper) is detected, the pattern having a specific machine-identifiable format is extracted from the image of the figures/photographs on the medium that is captured by the image sensor, the pattern is identified to obtain key information, and the stored information in the IC tag (the information includes data such as characters, figures, photographs, documents, sounds, and video images) is accessed based on the key information. More specifically, a specific pattern is extracted from the image captured by the image scanner and the stored information in the IC tag can be accessed only when the access to the stored information in the IC tag is allowed based on the information presented by the pattern (this information is also termed the access information because the access to the classified information is allowed based on this specific pattern, which will be described later) (because of this limited access, the stored information is also termed classified information). Then, the stored information of which the data security is ensured by the feature of the IC tag is accessed to read the classified information. The read classified information is supplied to an information device connected to this device together with the figures/photographs obtained by directly reading the sheet surface. In this way, the classified information does not need to be acquired separately from a flexible disc or file server. The classified information and image information can easily be used in a securely integrated manner.

In accordance with a seventeenth aspect of the present invention, the pattern in the sixteenth aspect is machine-identifiable but hard for a person to visually identify.

With the above structure, the pattern identified for obtaining key information necessary for accessing the stored information in the IC tag is machine-identifiable but hard for a person to visually identify, whereby the information data regarding the access to the stored information in the IC tag for reading the classified information is provided on the surface of the printed sheet as a so-called watermark image generally invisible for data secrecy, and the information data regarding the access to the classified information are extracted from the pattern on the printed sheet so that the access to the classified data becomes possible. Therefore, the user can access and read the classified information without effort as long as the integrity of the classified information and printed sheet is maintained (in other words, the printed matter is not altered). Conversely, if the integrity of the classified information and printed sheet is impaired (in other words, the printed matter is altered), the classified information cannot be read and the user cannot know the presence of the classified information.

For example, a fine yellow pattern presenting a so-called password (data) that enables the reading of the classified information stored in the IC tag is superimposed on the image as a watermark image on the printed sheet. A machine is used to read and decrypt the watermark image (password) and the decrypted password is given to the IC tag, whereby the classified information stored in the IC tag can be read. Conversely, if the IC tag is removed from the printed sheet and the password available only from the watermark image is unknown, the classified information in the IC tag cannot be read. In this way, the data regarding controlled information is provided on the printed sheet as a watermark image to increase the security of classified information in the IC tag and ensure the integrity of the classified information and printed sheet, preventing mistakes in management/usage.

In accordance with a eighteenth aspect of the present invention, the format in the sixteenth aspect has a fine geometry or an almost invisible color.

With the above structure, the pattern presenting access information has a fine geometry or an almost invisible color, whereby the format can be machine-identifiable but hard for a person to visually identify.

In accordance with a nineteenth aspect of the present invention, the pattern in the sixteenth aspect has the aforementioned format to present the access information encrypted, which is decrypted by specific key information.

With the above structure, the access information is presented by an encrypted code that is decrypted by specific key information, whereby multiple pieces of key information can be used to encrypt and decrypt the access key differently for each key so that different levels of access right to the classified information can be provided to different addressees of the printed matter. For example, a person A given key information a can access classified information α, a person B given key information b can access classified information α and β, and so on.

In accordance with a twentieth aspect of the present invention, the stored information in the sixteenth aspect indicates information stored in a storage device external to the device.

With the above structure, the stored information indicates information stored in a storage device such as a file server external to the device, whereby a larger volume of information than the IC tag capacity can be provided to the user although an access means to the storage device is necessary. Here, in this aspect of the invention, in addition to the general security measure of the IC tag, the access information necessary for accessing the IC tag is sort of encrypted by way of an image (pattern) as described above, allowing the access to the file server through a more enhanced security measure.

In accordance with a twenty first aspect of the present invention, the IC tag reader in the sixteenth aspect can power the IC tag wirelessly and establish data communication with the IC tag.

With the above structure, the IC tag reader can power the IC tag wirelessly (for example electromagnetic induction and radio waves) and establish data communication with the IC tag, whereby non-contact type IC tags such as wireless IC tags can be used.

In accordance with a twenty second aspect of the present invention, the IC tag reader in the sixteenth aspect has a directional and other range limitation means for establishing a limited exchangeable range excluding at least the paper ejection unit.

With the above structure, the IC tag reader has a directional and other range limitation means for establishing a limited exchangeable range excluding at least the paper ejection unit, whereby the sheet within the transfer path for printing before reaching the paper ejection unit can be detected. For example, the above structure allows the image forming input device to detect the targeted sheet in the course of printing based on print information and acquire the tag information. After the printing and ejection of the sheet, the storing information is written or activated on the printed sheet for which the tag information has been acquired. In this way, the storing information is not written or activated on a printed sheet other than the targeted printed sheet. The integrity between the printed information and stored information is ensured.

In accordance with a twenty third embodiment of the present invention, a digital multifunction device having an output function to output and print a visible image based on input image information and other information on a printing paper, film, or other medium and an image information input function to read and input the figures/photographs on the medium as an image and generate image data thereof. The digital multifunction device comprises a printing unit for forming and printing a visible image on the printing medium; an image scanner for capturing an image of the medium and directly reading the figures/photographs recorded thereon as an image; and an IC tag reader for establishing data communication with an ultra-small integrated circuit (IC) tag carried by the printing medium and storing information and for exchanging storing information or information stored in the IC tag and other information, wherein a pattern having a machine-identifiable format to present access information that is the key information necessary for accessing the stored information in the IC tag is printed on the medium carrying the IC tag to superimpose the pattern on the image based on image information, and the storing information is stored in the IC tag during the printing of an image based on the input image information, and the IC tag carried by the medium is detected, the pattern having a machine-identifiable format is extracted from the image of the figures/photographs on the medium that is captured by the image scanner, the pattern is identified to obtain key information, and the stored information in the IC tag is accessed based on the key information during the reading of the figures/photographs on a medium.

With the above structure, a pattern having a machine-identifiable format to present access information that is the key information necessary for accessing the stored information in the IC tag is printed on the medium carrying the IC tag to superimpose the pattern on the image based on image information and the storing information is stored in the IC tag during the printing of an image based on input image information, and the IC tag carried by the medium is detected, the pattern having a machine-identifiable format is extracted from the image of the figures/photographs on the medium that is captured by the image scanner, the pattern is identified to obtain key information, and the stored information in the IC tag is accessed based on the key information during the reading of the figures/photographs on a medium, whereby both unclassified information (figures/photographs printed) and classified information (information stored in the IC tag) recorded on a single medium can conveniently be duplicated with confidentiality and security of the classified information being ensured.

### EMBODIMENTS

Embodiments of the present invention will be described hereafter with reference to the drawings.

### Embodiment 1

This embodiment is a printed sheet formed by making print on a printing sheet or a printing medium and carrying an ultra-small integrated circuit (IC) tag in which information is stored, and a pattern presenting access information necessary for accessing the stored information in the IC tag is included in the print on the sheet.

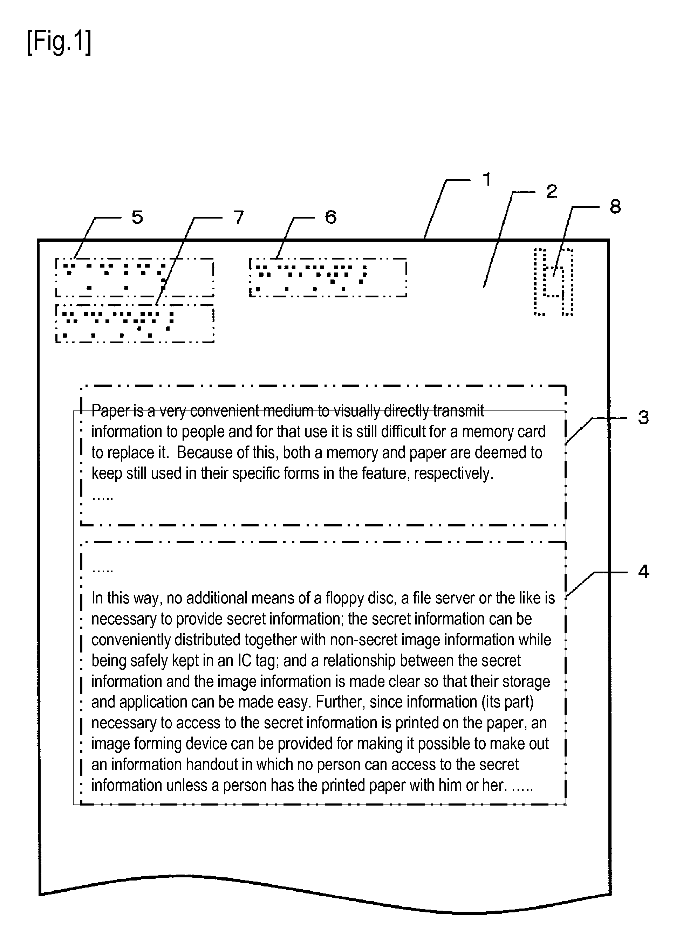

Fig. 1 is a diagram of a printed face of a printed sheet of this embodiment.

In Fig.1, a printed sheet (also termed a recorded sheet) 1 has prints 3 and 4 and pattern prints 5 to 7 on the surface of a printing sheet 2. Here, the prints 3 and 4 are ordinary readable prints (text in the example shown) of unclassified information (disclosed information).

The pattern prints 5 to 7 are fine yellow (almost invisible to a person) dot pattern prints as described later. The printed patterns 5 to 7 can be read as an image and processed by an image information input device (image scanner) in Embodiment 3 and a digital multifunction device in Embodiment 4, which are described later.

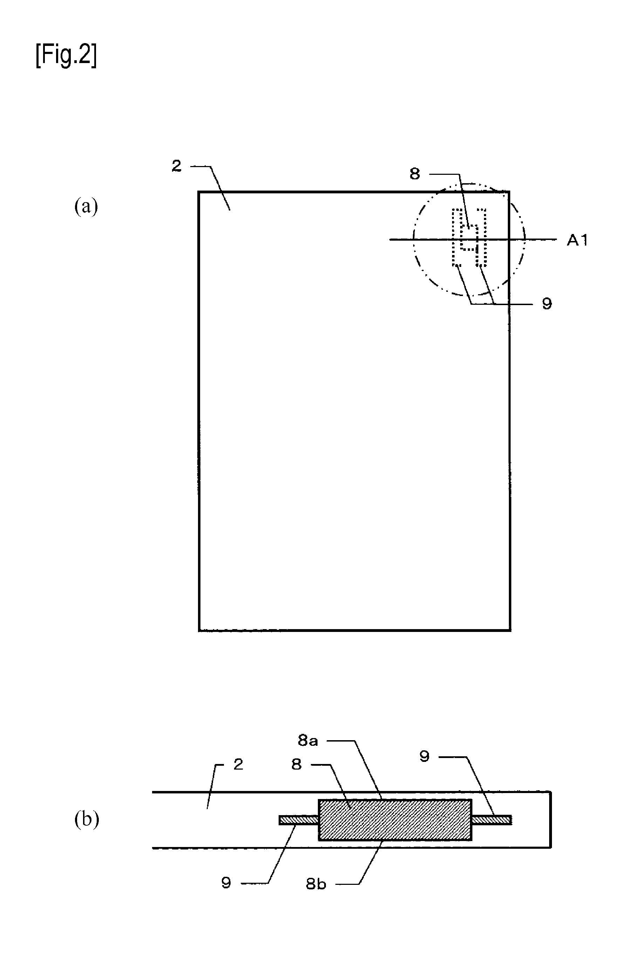

Fig.2 shows a printing sheet (also termed a recording sheet or simply a sheet) carrying an IC tag 8 before any print (the prints 3 and 4 and pattern prints 5 to 7) is made. Fig.2 (a) shows the entire face (the first face) and Fig.2 (b) shows a cross-section at A1 where the IC tag is provided.

In Fig.2, the IC tag 8 is an IC memory chip provided in the thickness of the sheet 2. The IC tag 8 can store information, be powered by an IC tag reader (29) described later in a non-contact manner using radio waves, and exchange (transmit/receive) data such as storing information, identification information (a unique code to each IC tag 8), and other tag information. When the storing information or information to be stored is stored in the IC tag as classified information, the access to this classified information (reading or transmission from the IC tag) requires access information (also termed the narrow-sense access information for distinction from broad-sense access information described later; the access information consists of a number and also termed the access number in this embodiment) that is special information for this purpose and has a unique content to each classified information. More specifically, the IC tag 8 stores the access information along with the classified information. Once the storing information is recorded (stored), the IC tag receives a request from the IC tag reader (29) for reading the stored information. If the stored information is classified information, it is determined whether the reading request includes the access number to that classified information. If it is included, the classified information is transmitted (read). On the other hand, if the reading request does not include the access number or the access number in the reading request is different from the stored access number, the classified information is not transmitted (read).

Here, the access number is the aforementioned narrow-sense access information and information necessary for accessing the IC tag 8 for the stored information, such as control information of the IC tag 8 on the stored information (information for the IC tag 8 to identify individual stored information such as data table pointer, location code, and column number), control information on classified information (information for the IC tag 8 and tag reader (29) to identify individual stored information such as unique identification code to individual classified information), or a combination of these.

Antennas 9 provided around the IC tag 8 in the thickness of the sheet 2 for receiving/transmitting radio waves are formed by printing their pattern using conductive ink. In this specification, the term "IC tag" includes the antennas 9 unless otherwise remarked.

The IC tag 8 is not necessarily in the thickness of the sheet 2. It can be attached to the surface of the sheet. However, being in the thickness of the sheet 2, the IC tag 8 can be unnoticeable. A thing in which classified information is recorded is preferably provided in the thickness of the sheet 2.

If the IC tag 8 can exchange tag information corresponding to the front/back side (8a and 8b) of the sheet 2 (IC tag 8) separately, the tag information corresponding to the figures/photographs printed on either side can be used. The user does not need to select the information and the exchanged tag information is limited to necessary information, which is preferable in handling classified information.

Tables 1 and 2 show exemplary storing information recorded (stored) in the IC tag 8 and the structure thereof. Table 1 shows an document ID (number) and Table 2 shows classified information. The IC tag 8 stores one document ID (number) and one or more pieces of classified information as storing information.

**Table 1**

| Document ID | Contents |
|---|---|
| | 123456 |

**Table 2**

| Classified Information | Access Number | Confidential Level | Contents |
|---|---|---|---|
| 1 | 8473592 | 1 | Then, in the present invention, an image forming device for printing and outputting a visible image based on input image information and other information on a printing paper, film or other medium... |
| 2 | 6792157 | 2 | 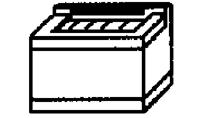 |
| 3 | 3927581 | 3 | Said IC tag carried by the medium is detected, a pattern having a specific format is extracted from the image of the figures/photographs on the medium that is a captured by said image scanner, ... |
| 4 | | | |

In Table 1, the document ID (number) is a unique document identifier (ID; a number in this embodiment) to identify the document. The document ID (number) information is given to the addressee of the recorded sheet 1 by a separate medium or means from the recorded sheet 1 (information transfer means such as verbal communication and telecommunication means).

In Table 2, the access number, which is narrow-sense access information, of classified information is information necessary for accessing the classified information of the document (a so-called key or password).

In this embodiment, the access number is created based on a random number generated for each piece of classified information and, when combined with the document ID (number), produces a unique content. Therefore, in order to access the classified information stored in the IC tag 8 carried by the recorded sheet 1 on which specific document information is recorded (a specific piece of classified information of a specific document), the access number (information) and the document ID (information) to specify the document are necessary. The information necessary for such access is termed the broad-sense access information. The user (unit/device/system/etc.) learns the presence of the classified information of a specific document from this broad-sense access information and can access the classified information via the IC tag reader (29) only when the access information is available to the user. Conversely, the correct access information to the classified information is not available to the user, the classified information cannot be read. In this way, the broad-sense access information is a so-called password (key) to read a specific classified information of a specific document. The document ID is the first key and the narrow-sense access information (access number) is the second key.

The confidential level is a value indicating the level of confidentiality of classified information (higher values indicate higher confidential levels in this embodiment).

The content field contains the content of the stored information (classified information) itself.

Referring to Fig. 1 again, the pattern prints 5 to 7 are formed by printing a pattern consisting of fine yellow dots. The geometry (dot position) of the pattern presents specific information (data).

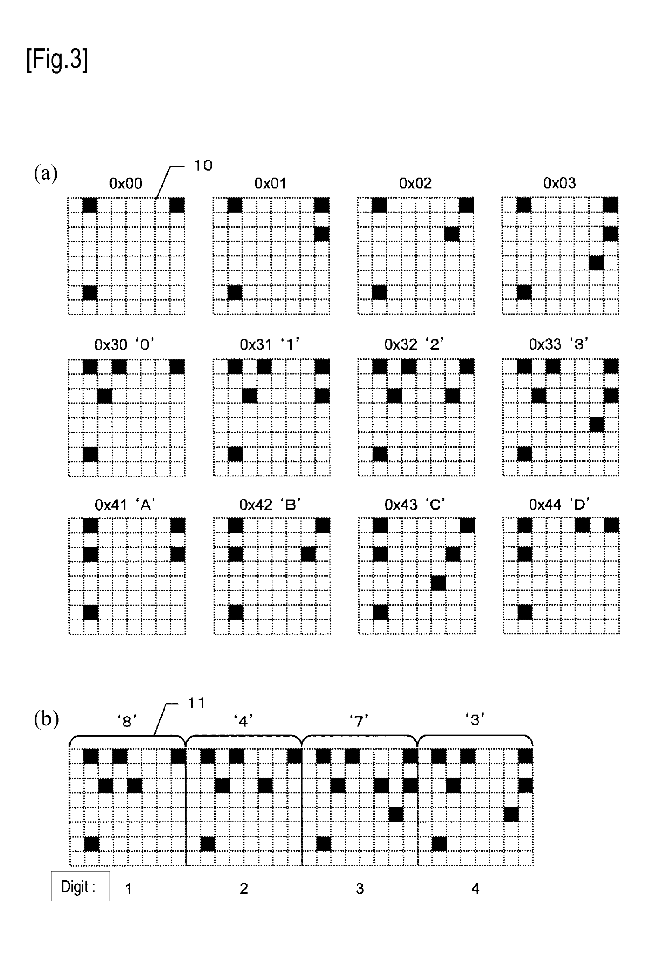

Fig.3 is a diagram for explaining the geometry (dot position) of the pattern prints (5 to 7). The Fig.3 (a) shows some patterns and information presented by data (values and characters). Fig.3 (b) shows a string of characters (numbers) expressed by the patterns shown in Fig. 3(a) as an example of information (data) consisting of a string of values.

Here, in Fig.3 (a), each pattern in a square zone 10 consisting of a total of 64 blocks, eight blocks in column x eight blocks in row, (the geometry of filled blocks in the figure; the broken lines are given for convenience and do not constitute the pattern) presents a value or a character presented by that value in a code (so-called ASCII code) system (0x00 (00 in hexadecimal number), 0x30 "0" (value 0x30, character "0"), 0x41 (value 0x41, character "A") and so on) (in this specification, the "character" includes control characters (0x00 to 0 x1F) and blank (0x20)). In this embodiment, the patterns corresponding to each value from the value 0x00 to the value 0x7F (127 in decimal number) are defined.

Fig.3 (b) shows a string of characters (numbers) "8473" by way of example. In this embodiment, the numerical values such as numbers are treated as a string (train) of numbers (characters) in the decimal representation (for example, a numerical value 8,473 is treated as a string of characters (numbers) "8473"). Each number (character) of a string of numbers (characters) is termed "digit" (corresponding to the position) and the top one is termed the first digit.

Each pattern shown in Fig.3 (a) consists of blocks each having a size of (as small as) 300 dots/inch [dpi] on the recorded sheet 1. The filled blocks (dots) in the figure are marked (printed) in yellow. For example, the patterns presenting numbers "8" (value 0x38), "4" (value 0x34), "7" (value 0x37), and "3" (value 0x33) are arranged on the printed face of the recorded sheet 1 from the left to right to present a string of characters (numbers) "8473" as shown in Fig.3 (b). Therefore, the first digit 11 (a square zone 10 presenting the first digit) is at the leftmost position on the sheet.

The patterns (dot geometry) presenting values or characters as shown in Fig.3 (a) are defined so that two or more marked blocks are not in succession even when they are printed as a string of characters as shown in Fig.3 (b). Furthermore, each dot is a fine yellow dot. Therefore, the patterns are identifiable by a machine such as an image scanner but generally unidentifiable to the naked eye.

In this embodiment, two or more of the patterns shown in Fig.3 (a) are arranged in one direction to form a pattern print (the pattern prints 5 to 7 in Fig.1), which is printed on the recorded sheet 1 at the top left in principle where no printed image (the prints 3 and 4 in Fig.1) based on the primary document information (unclassified document information) is marked. A space larger than a space for a digit is provided between adjacent pattern prints in the direction of arrangement of digits of the pattern prints.

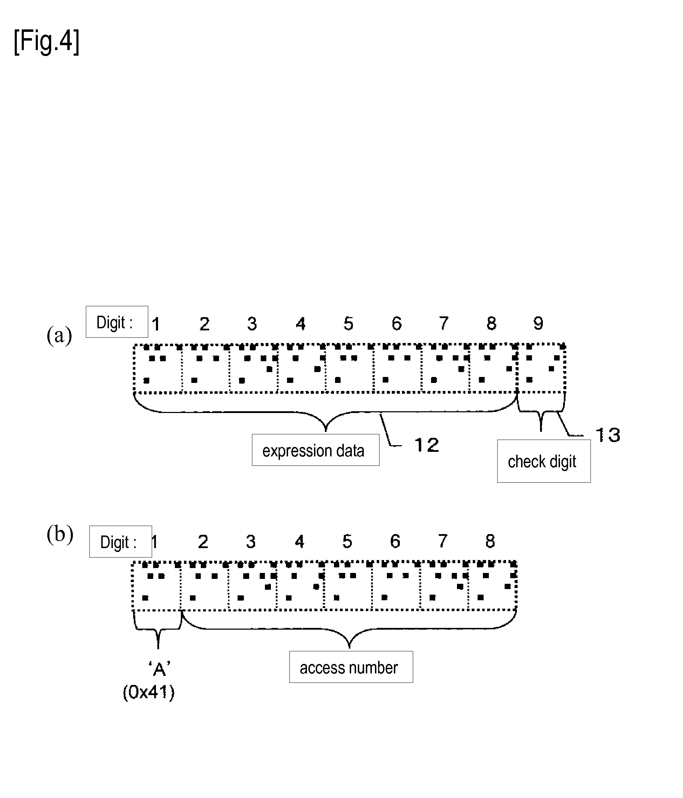

Fig.4 is an illustration for explaining the data structure of the pattern prints (5 to 7). Fig.4 (a) shows the data structure (consisting of presentation data 12 and a check digit 13 described later) of the pattern prints (5 to 7). Fig.4 (b) shows the structure of the presentation data 12 of the pattern prints 5 to 7.

In Fig.4 (a), the first to eighth digits present the data to transfer (termed the presentation data 12) of a pattern print and the ninth digit is a check digit 13. The pattern print (5 to 7) consists of the patterns presenting values or characters shown in Fig.3 (a) and arranged in a string of values such as characters (numbers) to present information. One printed pattern has an eight-digit (namely a string of eight characters) presentation data 12 followed by a single digit (the ninth digit) check digit 13. Here, the check digit 13 is determined so that the exclusive logical sum of the seven-digit binary numbers presenting the values (code values) of a string of nine values (characters) including the check digit 13, respectively, is zero.

The presentation data 12 of the pattern prints 5 to 7 in Fig. 1 presents an access number to access one piece of classified storing information (data) recorded (stored) in the IC tag. In Fig.4 (b), the first digit presenting a character "A" (value 0x41) indicates that this pattern print presents an unencrypted access number. The second to eighth digits present an access number as a string of numbers. For example, if the access number is 8,473, 592, the pattern print including the check digit 13 (a control character 0x09) consists of a string of characters "A8473592" followed by a control character of a value 0x09 as the check digit 13.

Here, the access number is not encrypted for convenience of explanation (in the case of the first digit being the character "A" in Fig.4 (b)). The string of characters can be encrypted. In such a case, the first digit in the Fig.4 (b) is a character (value) other than "A" to present the type of encryption.

The same access information (access number) can be used to any classified information on one document. In this embodiment, the pattern prints having different access information (access numbers) are made on the recorded sheet 1 to access different pieces of classified information.

Referring to Fig.1 again, as stated above, the IC tag 8 stores the stored information number, access number, confidential level, and content (classified information itself) of individual classified information as given in Tables 1 and 2. The pattern print 5 has a pattern having the data structure shown in Figs.4 (a) and 4(b) to present the access number 8473592 to the stored information of a stored information number 1; the pattern print 6 has a pattern to present the access number 6792157 to the stored information of a stored information number 2;, and the pattern print 7 has a pattern to present the access number 3927581 to the stored information of a stored information number 3.

The rules for dot geometry, relationship between a pattern and a character presented by the pattern, and data structure of the patterns as described above are not disclosed to those except for specific parties. Furthermore, multiple different rules are prepared and one of them is used, whereby even if they are visualized, the information secrecy can be maintained.

The printed sheet 1 of the present invention having the above structure includes in the print on the sheet 2 carrying the IC tag 8 patterns having a machine-identifiable format to present access information to the stored information in the IC tag 8 (the pattern prints 5 to 7), whereby unclassified and disclosed information is recorded by printing and classified information is recorded (stored) in the printed sheet 1 (in the IC tag 8). Therefore, there is no need of a separate means such as a flexible disc and file server to provide classified information. The classified information is securely stored in the IC tag and conveniently distributed along with the disclosed information. Additionally, the classified information and disclosed information are more securely integrated and more easily stored/used. Furthermore, the (partial) information necessary for accessing the classified information is printed on the sheet. No one can access the classified information unless he/she has the printed matter.

The recorded sheet 1 of the present invention integrates the entity of information whether or not the information is classified; in other words it integrates classified information and access information thereto together into a physically single recorded matter, whereby related pieces of information are not separated. No file server is required to print the classified information for use. The user can easily manage and handle the information. The distributor of the information does not need to keep managing the classified information on the server after the distribution.

It is the IC tag 8 (medium) wherein the classified information itself is recorded, so it can realize a highly secured recordation and distribution against leakage/alteration of the information. The information regarding the access to the classified information recorded in the IC tag 8 is recorded (printed) as an image. Therefore, the content of the classified information cannot be accessed simply by reading and electronically duplicating the electronic information regarding classified information to be recorded in the IC tag 8 using the IC tag reader (29), making the access to the classified information more difficult. More specifically, for providing classified information, the information data regarding the access to the classified information is included in the printed sheet 1 as a so-called watermark image that is generally invisible for data secrecy. The classified information stored in the IC tag 8 cannot be read when by any chance the IC tag 8 is removed from the printed sheet 1, ensuring the integrity of the classified information and the printed sheet 1.

Here, the specification of the access information format is kept confidential as a rule so that the access information is sort of encrypted, increasing the confidential security. It is difficult to optically duplicate the image in which the access information is recorded with accuracy, preventing the access information from being duplicated and spread.

As described above, data regarding controlled information is included in the printed sheet 1 as a watermark image, increasing the security of classified information in the IC tag 8 and ensuring the integrity of the classified information and printed sheet 1, which prevents mistakes in management/usage.

In other words, even classified information is actually recorded in the printed sheet 1 of the present invention, which is convenient to the user. The classified information is electronically recorded and cannot be duplicated by a conventional copy machine. The access information is recorded on the printed matter as an image. The necessary information cannot be duplicated by any device only with the IC tag reader (29), preventing the leakage. In this way, with disclosed information and related classified information being on one printed sheet 1, it is difficult to access the classified information unless he/she has the original printed sheet 1, whereby the entity of classified information can securely and conveniently distributed.

The pattern print presenting the access information (access number) is placed at the top left part of the recording sheet in the above description for convenience. In practice, if some printed image based on the primary text information is located there and the image (the marking part thereof) and access information are overlapped with each other, the pattern print is provided at some other place. Furthermore, if the entire string of characters of a pattern for a piece of access information cannot be provided at one place without overlapping with the primary printed image, the entire string of characters of a pattern can properly be provided at multiple places in non-marking parts of the primary printed image. In this way, the pattern print of access information is not necessarily provided at a fixed place and even can be at multiple places. The access information includes the storing information number as described above. There is no problem with having multiple pattern prints of the access information for the same storing information in later reading of the access information for use. This may rather increase reliability in the case that one of the pattern prints is smeared and causes reading error but another one is readable.

If the pattern print has such dot geometry that particularly adjacent dots are easily connected or separated when they are optically duplicated or read as an optical image and then printed using a color agent such as toner and ink, the pattern print is difficult to precisely duplicate. Such a pattern can cause errors in data presented by the pattern print when the printed sheet having the pattern print is optically duplicated, thus preventing duplication of the information carried by the pattern print (namely subsequent leakage of the classified information).

The access information of this embodiment is presented by the pattern prints (5 to 7) consisting of the patterns shown in Fig.3. The access information can be embedded in the print 3 or 4 that is the primary information print as a so-called watermark image. More specifically, this is a technique to present information by modifying the print 3 or 4 without visibly impairing the primary, visible characters/figures/photographs, or using a specific pattern of fine dots (print) inserted (dots printed in a blank area) or removed (blank dots provided in an area where the color agent such as toner should be applied), or other means. With such a technique, the presence of access information on the printed sheet is kept more secret. The pattern print is not necessarily printed in color and can be monoclonal.

### Embodiment 2

This embodiment is an image forming device (printing device/printer) for making print based on image information inputted from an external computer by printing unclassified image information on a recording sheet of paper carrying an IC tag, and recording and storing confidential information (information disclosed to a specific party; classified information) in the IC tag carried by the recording sheet. In other words, it is a device to produce the recorded sheet 1 as described in Embodiment 1 (to make a record on the recording sheet 2). Here, the recording sheet and the recorded sheet on which print is made are the same as those in Embodiment 1. Therefore, Figs. 1 to 4, Tables 1 and 2, and related description are recited for this embodiment.

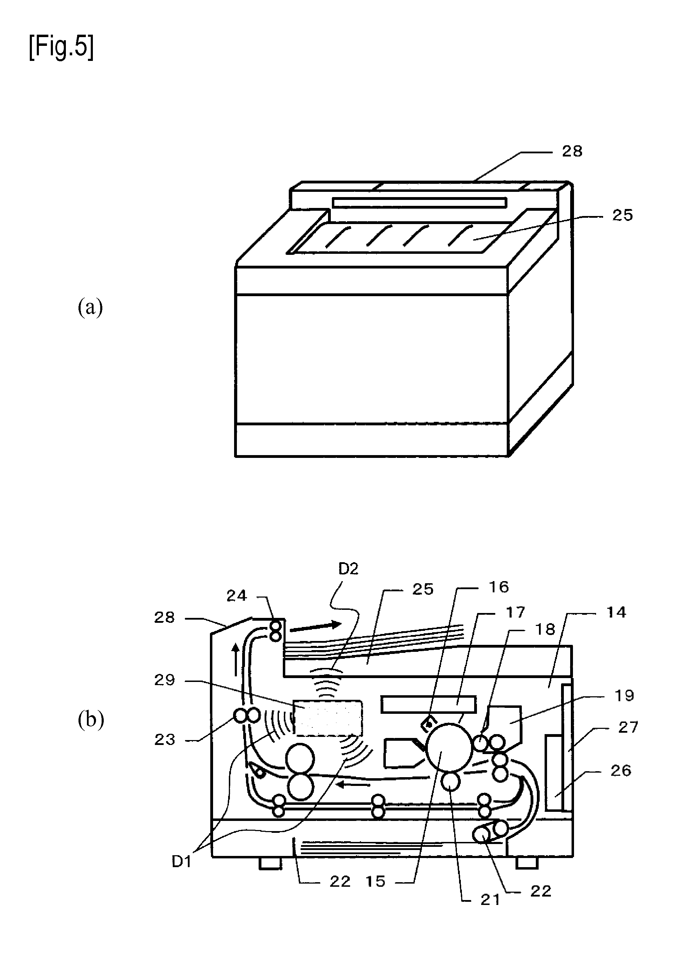

Fig.5 is a schematic illustration showing the entire structure of the image forming device of this embodiment (termed this device hereafter in this embodiment). Fig.5 (a) is a perspective rear view of the appearance and Fig.5 (b) is a cross-sectional view.

In Fig.5, a printer engine (which is the part of this device excluding a printer control unit (27) and an IC tag reader (29), which are described later, and also simply termed the engine) 14 is a so-called laser printer of electrophotography. The major components of its processing unit for forming images includes a cylindrical photoconductor drum 15 having a laminated organic photoconductor on the outer peripheral surface, a charger 16 for charging the surface of the photoconductor drum 15, an exposure unit 17 having a laser (not shown) for forming an electrostatic latent image on the surface of the photoconductor drum 15 according to image signals from the printer control unit (27) described later, a developer 19 holding a developing agent containing toner and having a developing roller 18 for developing the electrostatic latent image into a toner image, and a transfer roller 20 formed by a conductive urethane sponge around a metal shaft for transferring the developed toner image onto a recording sheet. The mechanism of the printer engine 14 is constituted by the above processing unit and an enclosure/cover containing a paper cassette 21 in which the recording sheet 1 is loaded, a paper feeding unit 22 for feeding the recording sheet 2 from the paper cassette 21 one at a time, a fixing unit 23 for fixing the transferred toner image on the recorded sheet 1, a paper ejection unit 24 for ejecting the fixed recorded sheet 1, and a paper ejection cover 25 where the recorded sheet 1 having print (an image formed) is ejected. The engine controller (26) described later controls (device-controls) the operation of the mechanism.

The photoconductor drum 15 rotates at a circumferential velocity of 100 mm/s. The exposure unit 17 has a laser power of 280 µW. A DC voltage of 1.2 kV is applied to the charger 16. The photoconductor drum 15 is set for a charging potential of -650 V and a post-exposure potential of -100 V. A biased voltage created by superimposing on a DC voltage of -500 V an AC voltage having square waves of 3 kHz in frequency and a peak-to-peak voltage of 1.5 kV is applied to the developing roller 18 of the developer 19. A voltage of +600 V is applied to the transfer roller 20.

The toner contained in the developing agent is produced by premixing polyester resin (86 % by weight) with pigment (5 % by weight), carnauba wax as parting agent (6% by weight), and salicylic zinc as charge control agent (3 % by weight), melting and kneading them, pulverizing the mixture into fine particles, and screening the particles to obtain nonmagnetic toner mother particles having a volume average particle size of 7.1 µm. The toner mother particles (98.5 % by weight) is coated (mixed) with hydrophobic silica (1.0 % by weight) and hydrophobic titania (0.5 % by weight) as a coating material.

The engine controller 26 is a so-called microcomputer system controlling (device-controlling) the operation of the printer engine (mechanism), comprising a central processing unit (MPU or CPU) for arithmetic-processing digital data, a read only memory (ROM) storing processing programs, a random access memory (RAM) as a temporal storage during the processing, input/output (IO) registers (also termed the ports) for electric drive of solenoids and motors and electric signal supply to switches and sensors of the mechanism, an interface (I/F) for data communication with the printer control unit (27) described later, and an interface for transferring image signals from the printer control unit (27) to the exposure unit 17 (termed the video I/F).

The above image forming device forms images as follows.

The laser of the exposure unit 17 receives image signals from the printer control unit (27) described later. The outer periphery surface of the photoconductor drum 15 is uniformly charged to the aforementioned charging potential by the charger 16. Then, the exposure unit 17 emits a laser on the surface of the photoconductor drum 15 according to the input image signals to form an electrostatic latent image having the aforementioned post-exposure potential. The developing roller 18 of the developer 19 forms a magnetic brush using the developing agent supplied to the developing zone (between the developing roller 18 and photoconductor drum 15) and rubs the surface of the photoconductor drum 15 with the magnetic brush to transfer toner to the electrostatic latent image and form a toner image. The toner image formed on the photoconductor drum 15 is transferred onto a recording sheet by the transfer roller 20 and then fixed on the recording sheet under heat and pressure by the fixer 23. The fixed recorded sheet is ejected onto the paper ejection cover 25 by the paper ejection unit 24. On the other hand, after the toner image is transferred, residual toner on the photoconductor drum 15 is removed by a cleaning blade in the form of a urethane sheet, which completes one image forming cycle of the printer engine 14.

The printer engine 14 was described above.

The recording sheet loaded in the paper cassette 21 is the sheet 2 carrying the IC tag 8 for storing information as shown in Fig.2 for Embodiment 1.

The print control unit 27 is a so-called microcomputer system controlling (device-controlling) the function/operation of this device (which is described in detail later).

An operation unit 28 is used for display of device information on a display element to the operator under the control of the printer control unit 27 and for inputting information to the printer control unit 27 by the operator through key (operating element) operation.

Under the control of the printer control unit 27, an IC tag reader (also simply termed the tag reader) 29 powers the IC tag carried by the sheet 2 and storing information in a non-contact manner using radio waves and establishes data communication for exchanging (transmitting/receiving) storing information or information stored in the IC tag 8 and other tag information. Here, the IC tag reader 29 changes the direction and intensity of the radio wave transmission to limit the positional range of the sheet 2 available for data exchange. In this device, when the direction D 1 is selected, the radio waves do not reach the other sheets 2 on the paper ejection cover 25. Only the sheet 2 between the paper feeding unit 22 and paper ejection unit 24 is available for data exchange. In this way, the sheet 2 to be printed is distinguished from the other sheets 2 in the paper cassette 21 or paper ejection unit 24 for detection and the tag identification information specifying the IC tag of that sheet 2 is detected. Then, the IC tag reader 29 can exchange tag information only with the IC tag 8 of the detected sheet 2.

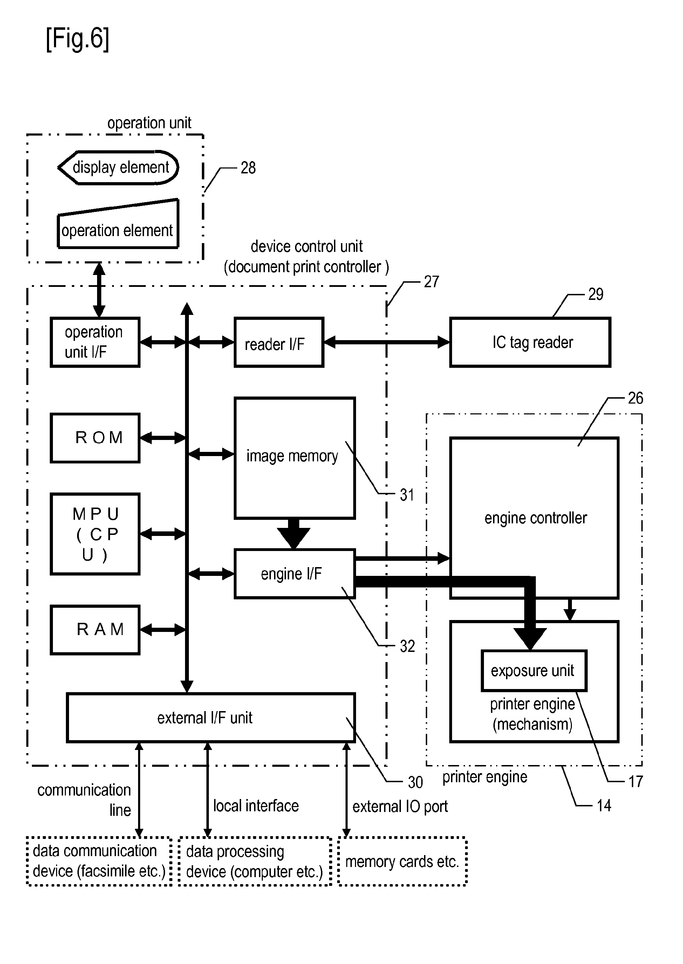

Fig.6 is a block diagram regarding the data processing/device control of this device.

In Fig.6, the printer control unit 27 comprises a central processing unit (MPU or CPU) for arithmetic-processing digital data, a read only memory (ROM) storing processing programs, a random access memory (RAM) as a temporal storage during the processing, an image memory (31) for temporally storing a print image (bitmap image) (which is described later), an interface (I/F) (30) for data communication with an external computer (which is described later), an operation unit interface (operation unit I/F) for controlling the operation unit, an engine interface (engine I/F) 32 for controlling the function or operation of the printer engine 14, a reader interface (reader I/F) for controlling the function or operation of the IC tag reader 29, and others. The printer control unit 27 processes document print information such as document information and print information inputted through the external interface (30) to generate a print image (bitmap image) in the image memory (31). The printer control unit 27 further generates image signals based on the bitmap image at the engine I/F 32 to supply them to the printer engine 14 (to the exposure unit 17 via the engine controller 26) (because of this, the printer control unit 27 is also termed the document print controller or simply print controller).

The engine controller 26 also has a microcomputer configuration. However, the engine controller 26 is treated as a single control circuit module in the entire structure of this device and the terms "microcomputer," "MPU," and "RAM" are used in relation to the printer control unit 27 in the following description of this embodiment.

The external interface (abbreviated to the external I/F) 30 allows data communication with an external device via a communication line for connection to a data communication device such as a facsimile device, local interface such as USB (universal serial bus) for connection to a data processing device such as a computer, and an external input/output port (abbreviated to the external IO port) for connection to a memory card to input/output document information (image information, figure information, text information, etc.), print information (print commands, print data, etc.), and other control information.

Here, this device has a 2k-byte [B] capacity buffer (termed the external IO buffer) for each external IO port within the RAM for the purpose of temporally and sequentially storing data from an external device via the external interface 30. Receiving data from an external device, the external interface 30 issues an interrupt signal to the MPU. Receiving the interrupt signal, the MPU receives the data from the external IO port and writes them after the existing data in the corresponding external IO buffer for temporal storage. The MPU executes this operation constantly (for each data input) in parallel to other operations while this device is powered.

The image memory 31 stores print image (bitmap image) data for one pager as temporal memory data. The memory data can directly be supplied to the engine I/F 32 under the control of the engine I/F 32. Then, the engine I/F 32 outputs the supplied data (print image data) to the printer engine as image signals.

The function or operation of the printer engine 14 is controlled (device-controlled) by the engine controller 26 that is controlled by the printer control unit 27 via the engine I/F 32 as described above so as to form a visible image (image forming) based on image signals supplied from the printer control unit 27 and output a printed sheet.

With the above structure, the basic printing/recording operation of this device based on information (data) presenting a document inputted from an external device and containing classified information will be described hereafter with reference to the basic processing flowchart of this device in a case that the external device is a computer.

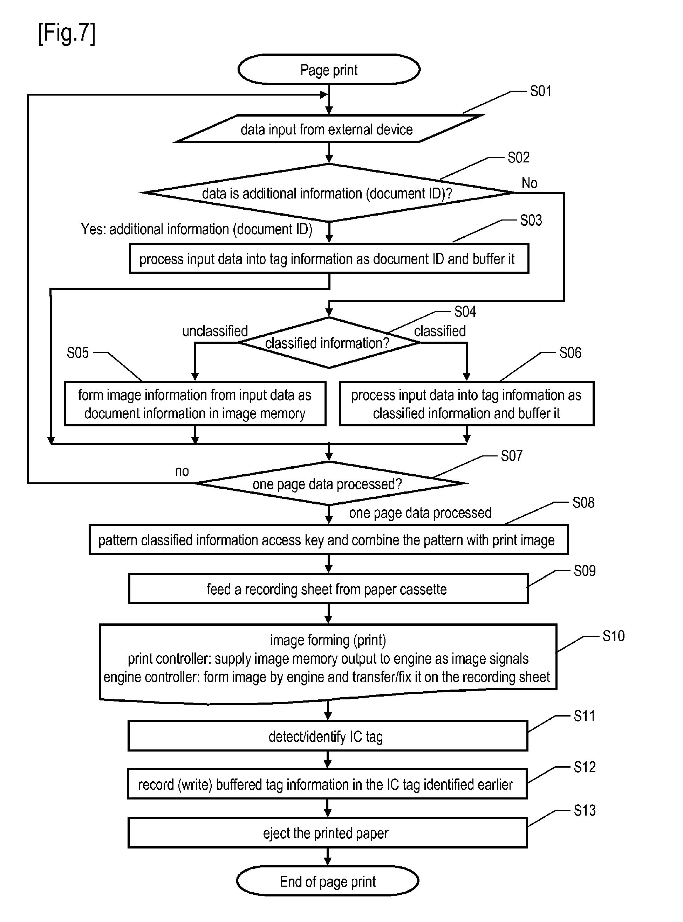

Fig.7 is a flowchart showing the basic printing/recording operation of this device.

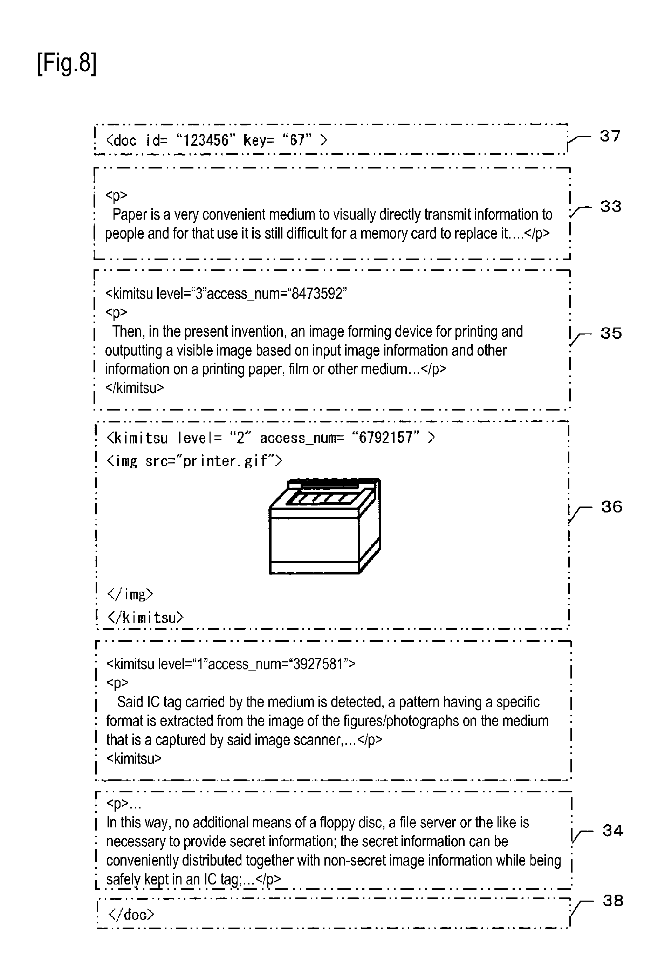

Fig.8 is a diagram showing the markup representation of a document containing classified information as data inputted from an external device.

In Fig.8, document information (text information) 33 and 34 is unclassified text information. Text information 35 is classified information of confidential level 3, document information (figure information) 36 is classified information of confidential level 2, and document information 36-1 is classified information of confidential level 1. Document information 37 and 38 is additional information for handling the classified information.

Here, the information (data) presenting the document inputted from an external device includes strings of characters interposed between a symbol "<" and a symbol ">" (called the tag; however, this tag is different from the IC tag) as additional information for a markup language. Data between a tag <doc> in the document information 37 and a tag </doc> appearing subsequently (the tag </doc> in the document information 38) are data of a document. The tag <doc> has an attribute "id" indicating a document ID (the document ID in the example shown is "123456") and an attribute "key" indicating the document key code in Embodiment 1 (the document key code in the example shown is 67 (0x43)). Data between a tag <kimitsu (classified)> in the document information 35 to 36-1 and a tag </kimitsu> appearing subsequently are data of classified information. The tag <kimitsu> has an attribute "level" indicating the confidential level and an attribute "access_num" indicating the access number. Using such markup and tags, the MPU detects the aforementioned symbols and identifies the tags to easily determine whether the read data are classified.

In Fig.7, when any data from an external device (document information as shown in Fig.8) are received (inputted) via the external interface 31 and temporarily stored in the external IO buffer, the MPU reads the oldest data among the data temporarily stored in the external IO buffer (the step S01; the term "step" will be omitted hereafter). Then, the MPU analyzes the read data and tries to interpret the information presented by the data. If the MPU cannot interpret the information by the read data alone, the MPU temporarily holds the data, reads the subsequent data, and tries to interpret the information together with the data held earlier. This operation is repeated until the information is interpreted.

Then, it is determined whether the data read until the information is interpreted are the additional information presenting a document (the tag <doc>) (S02). If it is the additional information presenting a document (the tag <doc>), the document ID information indicated by the attribute "id" (the data "123456") and the document key code information indicated by the attribute "key" (the value 67 "0x43") are obtained. Then, the document ID is encrypted based on the document key code, and the encrypted document ID and other tag information are temporarily stored in a temporal buffer (termed the tag information buffer) (S03). Here, the document key code value 67 (0x43) is not encrypted, and the document ID temporarily stored as the tag information consists of a string of characters "123456" for convenience of explanation.

On the other hand, if it is not the additional information, it is determined whether it is confidential document information (classified information) (S04).

When the read data are not classified information (for example the document data 33 and 34), the MPU handles the data as document information regarding regular printing or print information, forming a print image based on the data in the image memory 32 (forming a bitmap image) (S05).

On the other hand, when the read data are classified information (the document information 35 and 36), the MPU handles the data as classified information, processing the data into information to be recorded in the IC tag or creating tag information based on the data, and writing and temporarily storing the information immediately after the existing data in the tag information buffer (S06). Here, the tag information is temporarily stored in the tag information buffer using the format as shown in Tables 1 and 2.

The above steps S01 to S03, S05 or S06 are repeated for one page of a document (S07).

Subsequently, the access information data corresponding to each piece of the classified information are patterned and the pattern is combined with the print image (bitmap image) already formed in the image memory 32 (S08). The print image combined with the pattern presenting the access information is as shown in Fig.1 when it is printed. Here, the print (print image) 3 corresponds to the print information 33, the print (print image) 4 corresponds to the document information 34, and the access information of each piece of classified information corresponds to the pattern prints 6 to 8.

When the print image containing the patterns presenting the access information is ready in this device, the MPU instructs the engine controller 26 to start forming an image. The instructed printer engine 14 feeds a recording sheet 2 from the paper cassette 21 (S09).

The print controller 27 supplies the print image (wherein the image based on the document information is combined with the access information patterns) in the image memory 32 as image signals to the printer engine 14 via the engine interface 30.

Meanwhile, the printer engine 14 receives the image signals under the control of the engine controller 26 and forms a print image on the printing sheet 2 through the image forming process (S10).

After the recording sheet 2 is fed, the IC tag reader 29 tries to transmit the radio frequency wave in a direction D1 shown in Fig. 5 and detect the IC tag 8 carried by the recording sheet 2 at some proper point of time before the sheet 2 is ejected onto the paper ejection cover 25. Detecting the IC tag 8, the IC tag reader 29 acquires the identification information of the IC tag 8 from the tag information (S11). Then, the IC tag reader 29 writes and records the document ID and classified information temporarily stored in the tag information buffer (S03 and S04) in the IC tag 8 specified by the identification information acquired earlier as the tag information (the structure shown in Tables 1 and 2) (S 12).

After completing the print (image formation), the printer engine 14 ejects the recorded sheet 1 onto the paper ejection cover 25 (S13). Here, if the recorded sheet 1 is not ejected because of paper jam and the like, the recorded sheet 1 is of no use because of print failure but still has the IC tag in which the classified information is recorded. In such a case, the classified information has an increased risk of being improperly spread. Then, this device deletes the classified information already written in the IC tag specified by the identification information acquired earlier, substantially eliminating such a risk.

As described above, this device handles the document information containing classified information as shown in Fig.8 by printing the unclassified text information 33 and 34 (excluding the additional information) on a sheet and recording the classified text information 35 and figure information 36 in the IC tag 8 carried by the sheet. In such a case, the access information to each piece of the classified information (stored information) recorded in the IC tag 8 is printed on the sheet as fine yellow pattern prints 34 and 35 almost invisible to the naked eye. In this way, the recorded sheet shown in Fig.1 can be obtained.

The basic printing/recording operation of this device was described above.

The recording (writing) of classified information in the IC tag 8 can be on hold until the ejection of the recorded sheet 1 (in other words, the procedure of the step S10 is performed after the procedure of the step S11). In this way, the classified information is recorded (written) only for the recorded sheet experiencing no paper jam. Then, the step of deleting classified information already written in the recorded sheet 1 that did not ejected because of paper jam and the like is eliminated.

The pattern print presenting the access information is placed at the top left part of the printing sheet in the above description for convenience. In practice, if some printed image based on the primary text information is located there and the image (the marking part thereof) and access information are overlapped with each other, the pattern print is provided at some other place. Furthermore, if the entire string of characters of a pattern for a piece of access information cannot be provided at one place without overlapping with the primary printed image, the entire string of characters of a pattern can properly be provided at multiple places in non-marking parts of the primary printed image. In this way, the pattern print of access information is not necessarily provided at a fixed place and even can be at multiple places. The access information includes the storing information number as described above. There is no problem with having multiple pattern prints of the access information for the same storing information in later reading of the access information for use. This may rather increase reliability in the case that one of the pattern prints is smeared and causes reading error but another one is readable.

In the above explanation, the print is made on one side of a recording sheet. When the print is made on both sides of a recording sheet, the steps S01 to S10 are repeated for each side of the sheet (the step S09 is performed only once for the first side). In such a case, if the IC tag 8 can carry the tag information corresponding to the front/back side of the recording sheet separately, the identification information of the IC tag 8 corresponding to the front/back side of the recording sheet is detected in the step S11. The MPU identifies the front/back side of the IC tag 8 using the identification information and selectively records the classified information corresponding to the front/back side of the recording sheet as the tag information of that side. In this way, the classified information relating to the print on the front side of the recording sheet is recorded as the tag information of the front side of the IC tag 8 and the classified information relating to the back side of the recorded sheet is recorded as the tag information of the back side of the IC tag 8. The print (document information, or image information, figure information, text information, etc) and classified information on the recording sheet are more closely associated.

The classified information in this embodiment is a paragraph or an inserted figure in the same document as the unclassified information (disclosed information). The classified information can have no relation to a document of disclosed information, namely a part or all of another document.

The classified information in this embodiment is document information. Other than document information (image information, figure information, text information, etc), sounds (music) and video images (motion picture) can be treated as classified information and recorded in the IC tag 8. Information necessary for accessing the database in which such various types of classified information are stored (for example, URL (uniform resource locator), password) itself can be treated as classified information and recorded in the IC tag 8.

### Embodiment 3

This embodiment is an image information input device (image scanner) reading as an image the figures/photographs recorded on an original recorded sheet of paper carrying an IC tag as in Embodiment 1 and reading classified information recorded in the IC tag carried by the original sheet as the stored information and then supplying the image information and classified information to a computer. Here, the original sheet (the recorded sheet having print) is the same as in Embodiment 1 and, therefore, Figs 1 and 4, Tables 1 and 2, and related description are recited for this embodiment.

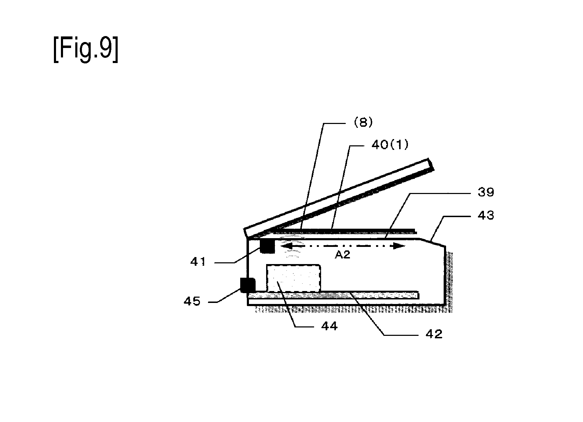

Fig.9 is a cross-sectional view showing the entire structure of an image information input device of this embodiment (termed this device hereafter in this embodiment).

In Fig.9, a platen 39 consists of a transplant glass plate on which an original 40 such as a document and book is placed.

An image sensor 41 is movable in the arrowed direction A2 in the figure and captures an image of the original 40 (the recorded sheet 1 carrying the IC tag 8 in the following explanation of this embodiment) placed on the transparent glass platen 39 through it as an object in a linear region (in the direction perpendicular to the drawing sheet) at each point within the movable range.

A scanner control unit (also termed the image reading control unit) 42 consists of a co-called microcomputer system controlling (device-controlling) the function/operation of this device (which will be described in detail later).

An operation unit 43 is used for display of device information to the operator under the control of the scanner control unit 42 and input of information to the scanner control unit 42 by the operator through key (operating element) operation.

An IC tag reader 44 is substantially the same as the tag reader 29 in Embodiment 2. Under the control of the scanner control unit 42, the IC tag reader 44 powers the IC tag 8 carried by the recorded sheet 1 and storing information in a non-contact manner using radio waves, and establishes data communication for exchanging (transmitting/receiving) storing information or information stored in the IC tag and other tag information.

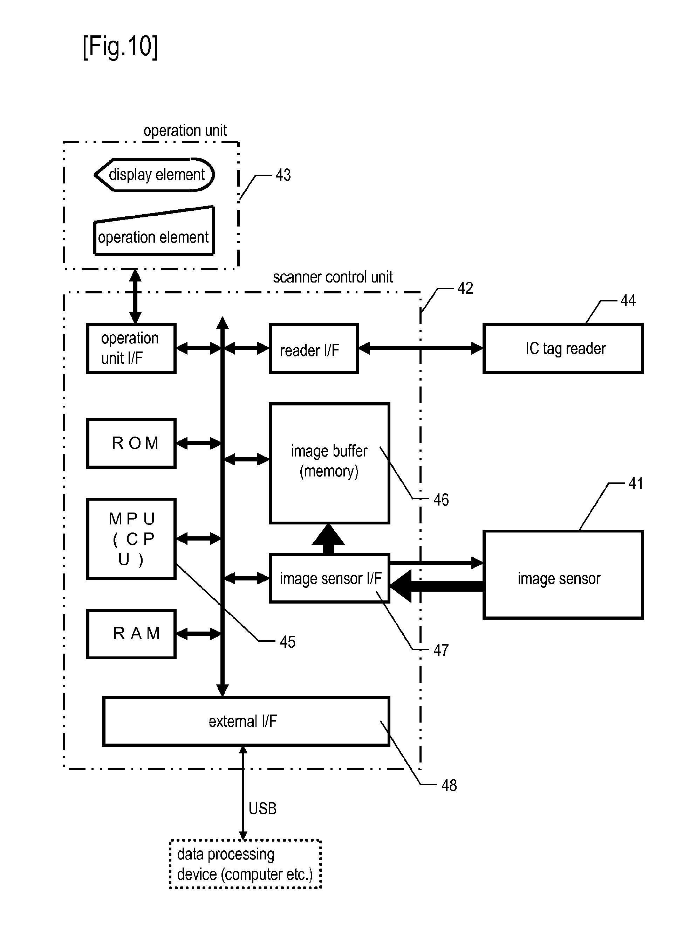

Fig.10 is a block diagram regarding the data-processing/device-control of this device.

In Fig.10, the scanner control unit 42 comprises a central processing unit (MPU or CPU) 45 for arithmetic-processing digital data, a read only memory (ROM) storing processing programs, a random access memory (RAM) as a temporal storage during the processing, an image buffer (memory) 46 for temporally storing a read image (bitmap image), an image sensor interface (image sensor I/F) 47 for controlling the operation of the image sensor, and an operation unit interface (operation unit I/F) for controlling the operation unit, a reader interface (reader I/F) for controlling the function or operation of the IC tag reader 44, an external interface (external I/F) 48 for data communication with an external computer via an interface such as USB (universal serial bus), and others.

The scanner control unit 42 (MPU 45) controls the movement and image-capturing operation of the image sensor 41, instructing the image sensor 41 to capture an image of the original 40 (the recorded sheet 1) placed on the platen 39 and receiving the image signals via the image sensor I/F 47 (this operation is termed the scanning), whereby the figures/photographs on the original 40 (the recorded sheet 1) are read as an digital image (the data is termed the scanned data) and temporarily stored in the image buffer (memory) 46. On the other hand, the scanner control unit 42 (MPU 45) outputs the image date temporarily stored in the image buffer (memory) in a specific format/procedure through data communication with a computer and the like via the external I/F 48. The scanner control unit 42 (MPU 45) further outputs to a computer and the like the content of classified information meeting a specific condition among the stored information in the IC tag 8 carried by the recorded sheet 1

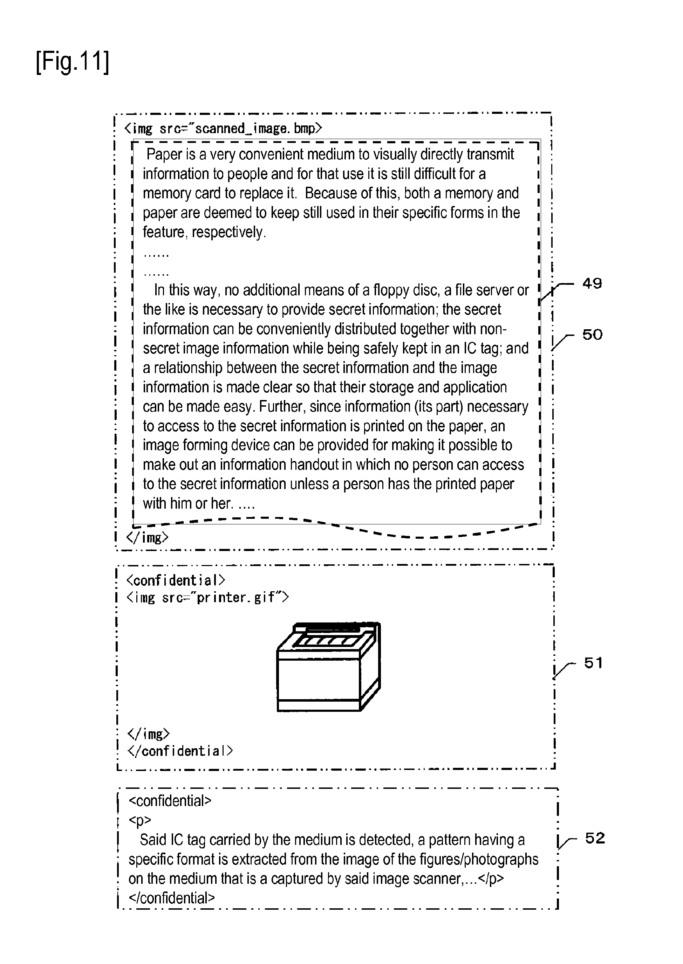

Fig.11 is a diagram showing the data format of the original 40 (the recorded sheet 1) that is output from this device to a computer.

In Fig.11, a tag <img> indicates that the data between this tag and a tag </img> appearing subsequently are image data. The print image data 49 that are bitmap image data are scanned data from the original 40 (the recorded sheet 1) except for the pattern prints (5 to 7) (the prints 3 and 4) (the print image data 49 are also termed the scanned data for convenience). The entity of the data is treated as a file having a proper file name ("scanned_image.bmp" in the example shown) and the file name is indicated by an attribute "src" of the tag <img>. The entity data are transmitted at a proper point of time during the data output (data communication) of the original 40 (in practice, for example, between a tag <img> and the subsequent tag </img>). The printing part scanned data 50 includes the print image data 49 and related tags (<img> and </img>).

A tag <confidential> indicates that the data between this tag and a tag </confidential> appearing subsequently are classified data. The entity of the classified data 51 is image data as shown in the figure and treated as a file having a file name "printer.gif." This entity data are interposed between the tag <img> and the tag </img> appearing subsequently for this classified data 51 (between the tag <confidential> and the tag </confidential> appearing subsequently for this classified data 51) for transmission. The second classified data 52 are text data. The entity of the information is character string data between the tag <confidential> and the tag </confidential> appearing subsequently for this second classified data 52.

With the above structure, the basic operation of reading the figures/photographs recorded on the original 40 (the recorded sheet 1) placed on the platen 39 as an image and reading the classified information recorded in the IC tag 8 carried by the original 40 (the recorded sheet 1) as stored information will be described with reference to the basic procedure flowchart of this device in a case that the external device is a computer.

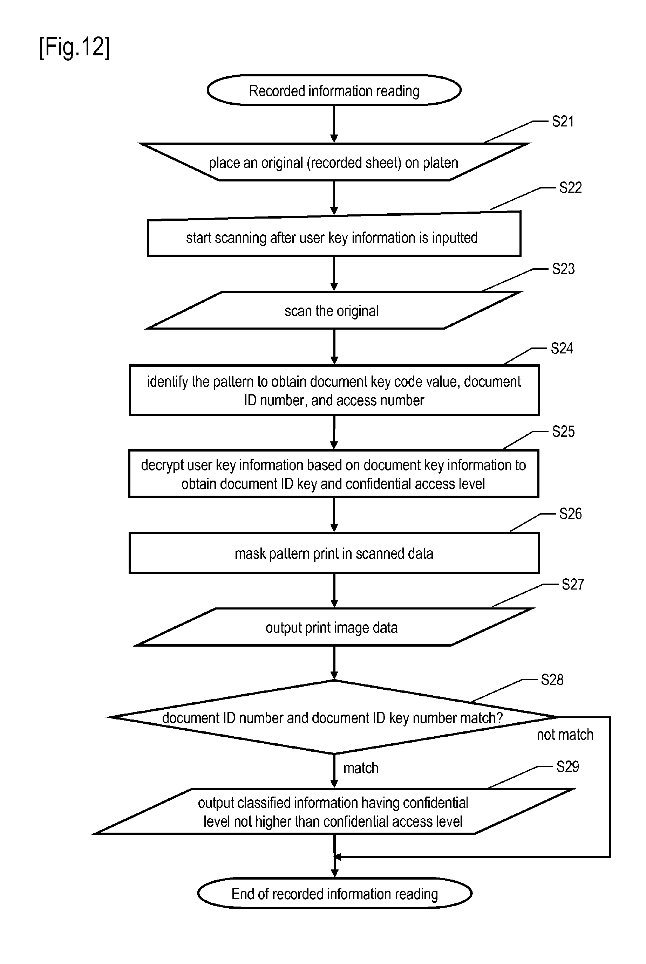

Fig.12 is a flowchart showing the basic operation of reading the image/stored information of this device.

In Fig.12, receiving the original 40 (the recorded sheet 1) carrying the IC tag containing classified information together with user key information, the user reads the image using this device. To do so, the user places on the platen 39 an original 20 (the recorded sheet 1) or an object to read an image thereof (S21).

Here, the user key information is information integrating the document ID (termed the document ID key hereafter in order to distinguish it from the document ID stored in the IC tag 8) and a confidential access level. The confidential access level is the highest confidential level of classified information accessible by the user (in other words, this device does not allow the user to access any classified information having confidential level higher than this confidential access level). In this device, for example, when the document ID key is a number "123,456" and the confidential access level is a value "2," the user key information consists of a string of characters "1234562." This user key information (a string of characters "1234562") is given to the user when the original 40 or recorded sheet 1 of this device is distributed to him/her from the distributor.

Here, the user key information is not encrypted for convenience of explanation (the user key information is formed by a simple connection of the string of numbers of the document ID key and the number of the confidential access level). The document ID key and confidential access level can be integrated and encrypted. In such a case, the information presenting the type of encryption rule is included in the pattern print 5 as a document key code (for example, a value 68 (0x44) that is different from the non-encryption indicator value 67 (0x43)).

Then, the user first inputs the user key information given preliminarily using the keys (operation device) of the operation unit 43 before scanning the image (S22). This device temporarily stores the inputted information in the RAM. Then, the user operates the keys to start the image reading (S22).

In response to the key operation to start the image reading, this device scans the original 40 (the recorded sheet 1), reads the figures/photographs on the original 40 (the recorded sheet 1) as a digital (bitmap) image, and temporarily stores the image in the image buffer (memory) 45 (S23).

Then scanner control unit 42 (MPU 45) performs image recognition on the read image (scanned data) in the image buffer (memory) 46, extracts the pattern prints (5 to 7), and acquires information presented by each print (S24). Here, the following information is acquired.
Pattern print 5: · access number = 8473592
Pattern print 6: · access number = 6792157
Pattern print 7: · access number = 3927581

Then, the MPU 45 decrypts the user key information (a string of numbers "1234562") temporarily stored in the RAM based on the document key code value 67 (0x63) to acquire the document ID key and confidential access level (S25). Here, the document key code is the "non-encryption indicator" value 67 (0x63). Therefore, the MPU 45 uses a value "1,234,562" given by the string of numbers "1234562" as it is and separates the document ID key number from the confidential access level, confirming the document ID key number of 123456 and the confidential access level value of 2. The confirmed information (number and value) is temporarily stored in the RAM.

Then, the MPU 45 masks the partial images of the scanned data where the pattern prints (5 to 7) are placed, in other words it replaces the partial images where the pattern prints are placed with their adjacent (background) images to delete them (S26). With the print patterns (5 to 7) being deleted, the scanned data becomes the print image data (48).

Then, the MPU 45 supplies the print image data in a data format including control information (data) indicating that the data are bitmap data to an external computer via the external interface 48 (S27). The printing part scanned data 50 in Fig.11 is this output data.

Then, the MPU 45 compares the document ID key number confirmed from the user key information based on the document key code value with the document ID number stored in the IC tag 8, and determines whether or not they match (S28).

When the document ID key number does not match the document ID number, the MPU 45 ends the recorded information reading. In other words, the MPU 45 assumes that the user is not allowed to access the classified information. To this user, the MPU 45 outputs the print image data at the step S27 but does not output the classified information stored in the IC tag 8.

On the other hand, when the document ID key number matches the document ID number, the MPU 45 assumes that the user is allowed to access the classified information. To this user (in this image reading), the MPU 45 allows the output of the classified information stored in the IC tag to his/her computer in accordance with conditions (S29). The classified information is output as follows.

First, the MPU 45 selects the classified information having the same access number as that presented by each of the printed patterns 5 to 7 in the stored information in the IC tag 8 having the structure as shown in Tables 1 and 2 referred to in Embodiment 1. Then, the MPU 45 compares the confidential level value of the selected classified information with the confidential access level value obtained earlier (for example, the aforementioned user key information has an input value of 2). When the confidential level value is equal to or lower than the confidential access level value, the MPU 45 outputs the content of the classified information as classified information or in a data format including control information (data) indicating that the data is classified information (data) to the computer (S29).

For example, for the printed pattern 5, the classified information of the stored information number 1 having the access number of 8473592 is selected in the stored information in the IC tag 8 having the structure shown in Tables 1 and 2 based on the access number of 8473592 presented by this pattern. The confidential level value of 3 is higher than the confidential access level value of 2. Therefore, the content or data consisting of a string of characters "Then, in the present invention, ...input..." is not output.

Then, for example, for the printed pattern 6, the classified information of the stored information number 2 having the access number of 6792157 is selected based on the access number of 6792157 presented by this pattern. The confidential level value of 2 is not higher than (equal to) the confidential access level value of 2. Therefore, the content or data consisting of a figure (the drawing of a printer) is output as classified information. The classified data 51 in Fig.11 is this output data.

Then, for example, for the printed pattern 7, the classified information of the stored information number 3 having the access number of 3927581 is selected based on the access number of 3927581 presented by this pattern. The confidential level value of 1 is lower than the confidential access level value of 2. Therefore, the content or data consisting of a string of characters "Said IC tag carried by the medium ..." is output as classified information. The second classified data 52 in Fig.11 is this output data.

The basic operation of reading the figures/photographs recorded on the original 40 (the recorded sheet 1) placed on the platen 39 as an image and reading the classified information recorded in the IC tag 8 carried by the original 40 (the recorded sheet 1) as stored information was described above.

In this embodiment, the classified information recorded in the IC tag 8 has no relation to the prints (3 and 4). The relationship to the prints (3 and 4) can be recorded in the IC tag 8 as tag information or presented by another pattern print specified separately so that the classified data are output in a manner or form associated with the prints (3 and 4). For example, when the classified information contains print layout information, this device outputs the classified data in association with the printing part scanned data of the prints (3 and 4) based on the print layout information (for example by numbering and positioning them together). In this way, when the print is made based on the output data, the prints (3 and 4) and classified information can be printed in a proper print layout according to the confidential access level in the user key information.

### Embodiment 4

This embodiment is a digital multifunction device for reading the stored information that is classified information recorded in the IC tag carried by an original sheet of paper and combining an image formed based on the stored information with an image of the figures/photographs recorded on the sheet for printout. In other words, using the recorded sheet described in Embodiment 1 as an original sheet, the devices captures an image of the figures/photographs recorded on the sheet, reads classified information recorded as stored information from the IC tag carried by the original sheet, and further creates a recorded sheet 1 described in Embodiment 1 based on the image information and classified information (recording on a recording sheet 2). Here, the recording sheet and recorded sheet are the same as those in Embodiment 1. The image reading unit (57) and image forming unit (58) are substantially the same as those in Embodiment 2 or 3. Therefore, Figs. 1 to 4, 7, 8, 11, and 12, Tables 1 and 2, and related description are recited for this embodiment.

The digital multifunction device of the present invention (also termed this device in this embodiment) comprises an operation unit (not shown) that includes a device display unit consisting of a liquid crystal indicator and multiple light emitting diodes and a device input unit consisting of multiple key switches. The operation unit is used for display to the operator and input from the operator of this device, which is provided on the front side of the platen (3).

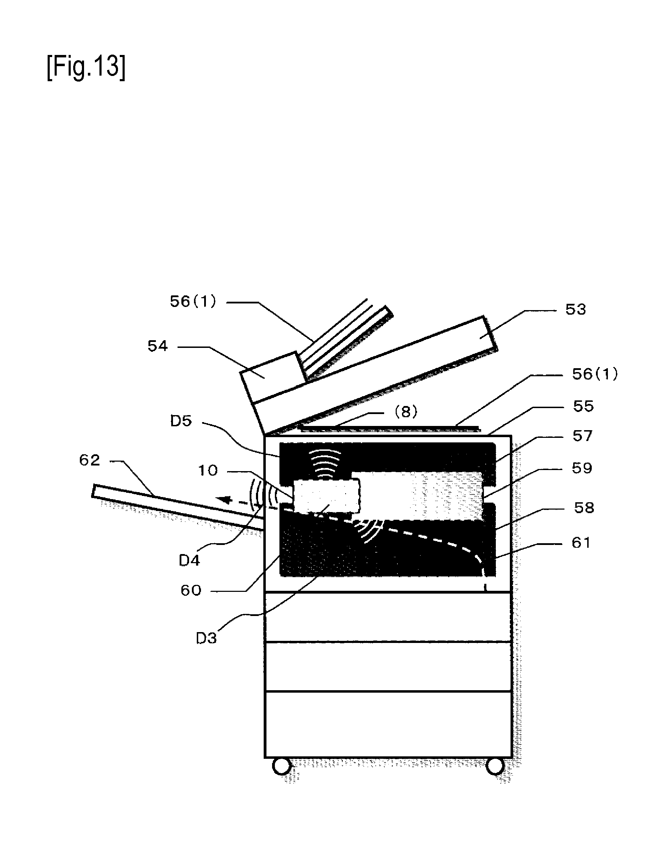

Fig.13 is a schematic front cross-sectional view for explaining the configuration and structure of this device.

In Fig.13, a platen cover 53 is provided with an automatic document feeder (ADF) 54. In the figure, the platen cover 53 is opened in relation to the surface of a platen 55 for convenience of explanation. The platen cover 53 can be closed in relation to the surface of the platen 55; the user can open/close it as needed. When the platen cover 53 is closed, the user can feed multiple sheet documents 56 into the ADF 54. The sheet documents 56 are fed one at a time and transferred onto the platen 55 as an original copy (also simply termed the original).

On the other hand, when the platen cover 53 is opened as shown in the figure, the user can place the original 56 such as a document or book directly on the platen 55.

The platen 55 consists of a transparent glass plate on which an original such as a document or book is transferred or placed as described above (both a sheet document 56 transferred by the ADF 54 and an original placed by the user are termed the original 56 hereafter). Here, the original 56 carries an IC tag 8.

An image reading unit 57 is the same as the one in Embodiment 3 except for the image scanner and its operation unit and the IC tag reader. The built-in image sensor (not shown) reads the figures/photographs on the original 56 transferred onto or placed on the transparent glass platen 55 through it as a digital image.

An image forming unit 58 is substantially the same as the one in Embodiment 2 except that the operation unit and IC tag reader are excluded, namely it has the printer engine as the core part. The built-in printer engine (not shown) makes print based on image information inputted through the external I/F (not shown) on a recording sheet. For the details of the image forming unit 58, the description in Embodiment 2 except for the description regarding the operation unit 2 and IC tag reader is recited. A device control unit 59 is substantially a combination of the scanner control unit in Embodiment 3 and the printer control unit in Embodiment 2 and consists of a so-called microcomputer system controlling (device-controlling) the function/operation of this device (which is described in detail later).

Provided on the front side of the platen 55, the operation unit (not shown) is used for display of device information on the display elements to the operator under the control of the device control unit 59 and input of information to the device control unit 59 by the operator through the key (operation element) operation.

An IC tag reader 60 is substantially the same as the tag reader 29 in Embodiment 2, powering the IC tag 8 carried by the sheet 2 and storing information in a non-contact manner using radio waves under the control of the device control unit 59 and establishing data communication for exchanging (transmitting/receiving) storing information or information stored in the IC tag and other tag information.

The IC tag reader 60 can change the direction and intensity of the transmitted radio wave and limit the positional range of the sheet 2 available for data exchange. In this device, when the direction D3 is selected, the radio waves do not reach the sheet 2 on the platen or on the paper feeding tray and only the sheet 2 somewhere between the paper feeding unit 61 and paper ejection unit (62) within the image forming unit 58 is available for data exchange. When the direction D4 is selected, the radio waves do not reach the sheet 2 on the platen or somewhere between the paper feeding unit 61 and paper ejection unit (62) within the image forming unit 58. Only the sheet 2 on the paper ejection tray 62 is available for data exchange. When the direction D5 is selected, the radio waves do not reach the sheet 2 on the paper ejection tray 62 or somewhere between the paper feeding unit 61 and paper ejection unit (62) within the image forming unit 58. Only the sheet 2 on the platen 55 is available for data exchange. With the direction and intensity being changed, the sheet 2 at a specific position that is the target of information exchange is distinguished from the other sheets 2 and, then, the tag identification information specifying the IC tag 8 carried by the detected sheet 2 can be detected. After the detection, the IC tag reader 60 can use that specific tag identification information to exchange tag information only with the IC tag 8 carried by the detected sheet 2.

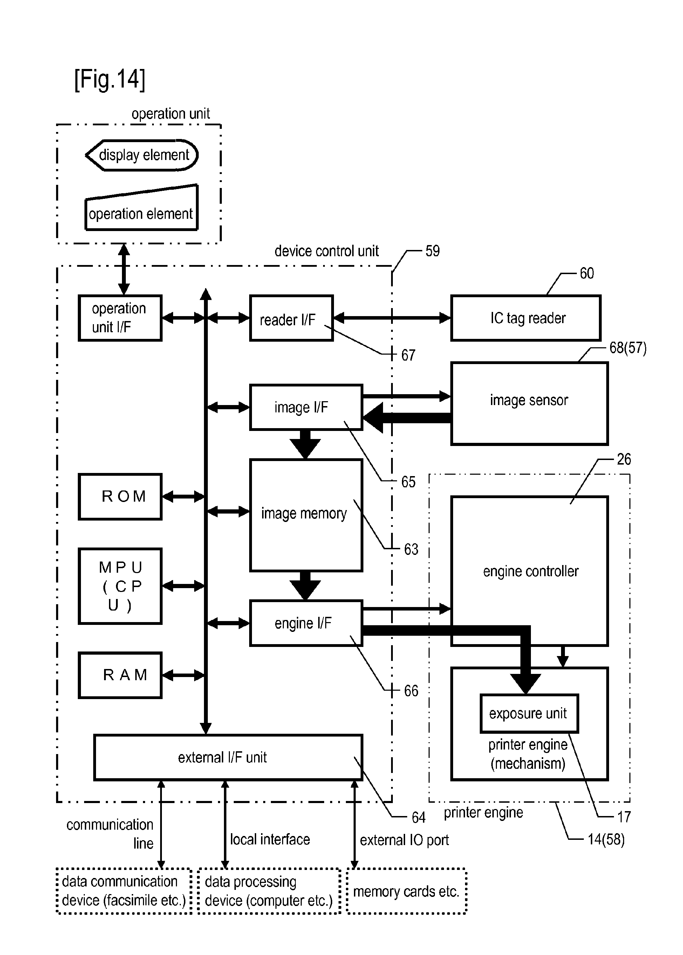

Fig.14 is a block diagram regarding the data processing/device control of this device.

In Fig.14, the device control unit 59 comprises a central processing unit (MPU or CPU) for arithmetic-processing digital data, a read only memory (ROM) storing processing programs, a random access memory (RAM) as a temporal storage during the processing, an image memory 63 for temporally storing a read image and print image that are bitmap images, an external interfaces (external I/F) 64 for data communication with an external computer, an operation unit interface (operation unit I/F) for controlling the operation unit, an image sensor interface (image sensor I/F) 65 for controlling the operation of the image sensor, an engine interface (engine I/F) 66 for controlling the function or operation of the printer engine 14, a reader interface (reader I/F) 67 for controlling the function or operation of the IC tag reader 60, and others.

The device control unit 59 controls the movement and image-capturing operation of the image sensor 68, instructing the image sensor 68 to capture an image of the original 56 (the recorded sheet 1) placed on the platen 39 and receiving the image data via the image sensor I/F 65 (this operation is termed the scanning), whereby the figures/photographs on the original 56 (the recorded sheet 1) are read as a digital image (the data are scanned data) and temporarily stored in the image buffer (memory) 63. On the other hand, the device control unit 59 outputs the image data temporarily stored in the image buffer (memory) in a specific format/procedure through data communication with a computer via the external I/F 64. The device control unit 59 further processes the document print information such as document information and print information inputted through the external interface 64 to generate a print image (bitmap image) in the image memory 63 and, then, generate image signals based on the bitmap image at the engine I/F 66 to supply them to the printer engine 14 (the exposure unit 17 via the engine controller 26). For the details of these functions, the descriptions in Embodiment 2 and 3 are recited.

With the above structure, this device operates according to the basic process flowchart in Embodiment 2 or 3 (Figs 7 and 12 and related description) (the descriptions in Embodiments 2 and 3 are recited for the details of the operation). Furthermore, these basic operations are performed nearly in parallel provided that the image reading unit supplies the read print image data to the image forming unit 58 and the image forming unit 58 receives the print image data as input data, realizing a so-called duplication operation in which the image on the original is read and the image is printed on a printing sheet.

Here, this device has the following duplication operation modes.
1) Paper duplication mode
2) Classified information duplication mode

In the paper duplication mode, as in a conventional copy machine, an original 56 (with or without the IC tag 8) is transferred onto or placed on the platen 55 and the figures/photographs of the original 56 on the side facing the image scanner 68 of the image reading unit 57 is read as an image and duplicated on another recording sheet (with or without the IC tag 8). In the paper duplication mode, the device control unit 59 instructs the image reading unit 57 to read the original 56 on the platen 55, supply the read image to the image forming unit 58, and instruct the image forming unit 58 to print the image. When the printed sheet 1 shown in Fig.1 is used as an original to duplicate in this mode, this device produces a printed sheet that looks just like the printed sheet 1 shown in Fig.1. Here, even if the recording sheet 2 carries an IC tag 8, the information recorded in the IC tag 8 of the printed sheet 1 used as an original is not copied in the IC tag 8 of the printing sheet 2.

On the other hand, in the classified information output mode, an original 56 (with an IC tag 8) is transferred onto or placed on the platen 55, the figures/photographs of the original 56 on the side facing the image sensor 68 of the image reading unit 57 is read as an image and duplicated on another recording sheet 2 (with or without an IC tag 8), the classified information stored in the IC tag 8 is read by the IC tag reader 60 and visualized as characters, a figure, or an image, or classified information generated or acquired from an external source based on the information is visualized, and printed by the image forming unit 58. Here, for reading the classified information, this device asks the operator for the user key information for accessing the classified information and further acquires the document ID key and confidential access level information from the pattern print of the present invention included in the image read by the image reading unit. This device does or does not visualize or print the classified information depending on the content of the information.

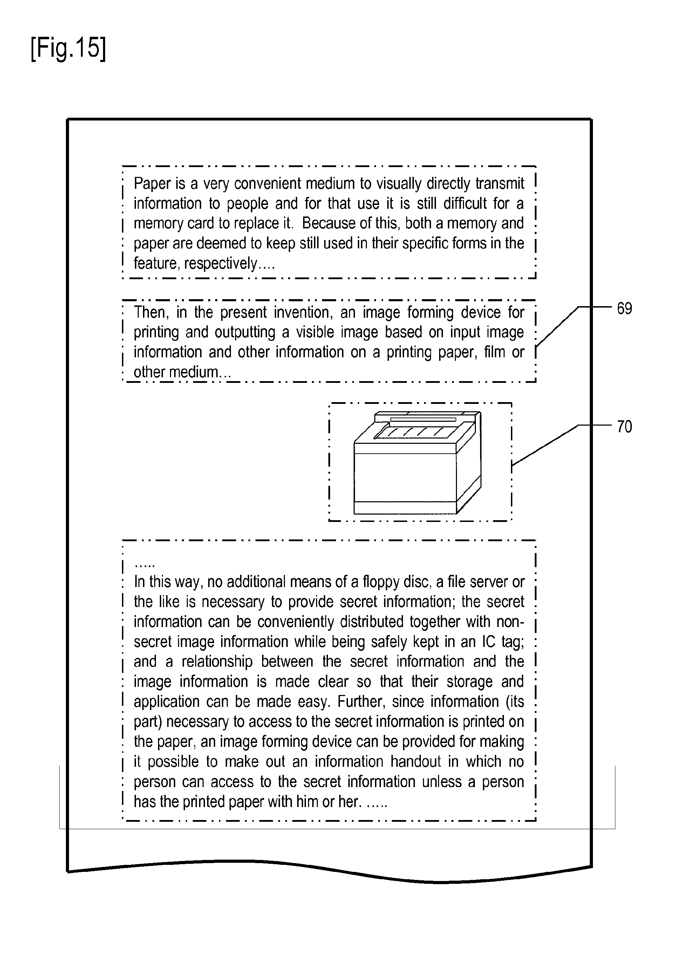

Fig.15 is a diagram of a printed sheet output by this device when the printed sheet 1 shown in Fig.1 is used as an original to duplicate in this mode and the classified information is allowed to be printed based on the user key information and document ID key and confidential access level information. As seen from Fig.15, the original printed sheet 1 shown in Fig.1 is duplicated together with the classified information (69 and 70) in this mode. Here, again, even if the printing sheet 2 carries an IC tag 8, the information stored in the IC tag 8 of the original printed sheet 1 is not copied in the IC tag 8 of the printing sheet 2.

With this classified information output mode, the device makes the classified information available only to the user who is allowed to access or in accordance with the access level for the same original 56. The reading and identification of the pattern prints (5 to 7) of the present invention is essential for acquiring the classified information. The classified information stored in the IC tag 8 still cannot be visualized or printed by anyone who does not have the original sheet even if it is electronically duplicated by any means or the user key information or a so-called password is unduly obtained.

With the operation described above, for printing an image based on input image information, this device prints the patterns (5 to 7) having a machine-identifiable format to present access information that is the information necessary for accessing the IC tag for the stored information on the medium (2) carrying the IC tag 8 to superimpose them on the image based on image information and stores the storing information in the IC tag 8. On the other hand, for reading the figures/photographs on a medium, the device detects the IC tag 8 carried by the medium and extracts the patterns (5 to 7) having a specific identifiable format from the image captured by the image reading unit 57 with the image sensor 68, identifies the patterns (5 to 7) to obtain key information, and accesses the stored information in the IC tag 8 based on the key information. In this way, unclassified information (figures/photographs printed) and classified information (information stored in the IC tag) recorded on a single medium (2) can be duplicated conveniently regardless of the type of information while ensuring the confidentiality and security of the classified information.

The printing medium of the present invention can be utilized as a general printing sheet used in printers and copy machines and as sheets for securities. Furthermore, it can be utilized as paper for books/magazines/newspapers/etc. widely distributed to the public. The image forming device of the present invention can be utilized as a printer and a copy machine and as a printing machine for books/magazines/newspapers/etc. The image information input device of the present information can be utilized as a stationary image scanner and as a hand-held image scanner and digital camera.

## Claims

1. A printing medium that is a paper, file or the like and on which print is made, comprising:
said medium carrying an ultra-small integrated circuit (IC) tag storing information,
wherein said print includes a pattern having a machine-identifiable format to present access information that is the key information necessary for accessing said IC tag for the stored information.

2. The printing medium according to Claim 1, wherein said format presenting said access information is machine-identifiable but hard for a person to visually identify.

3. The printing medium according to Claim 1, wherein said IC tag is wirelessly powered from an external device and establishes data communication with an external device using electromagnetic induction or radio waves.

4. The printing medium according to Claim 3, wherein an antenna is formed as a conductive ink drawing inside or on the surface of said medium.

5. An image forming device printing a visible image based on input image information and other information on a printing paper, film, or other medium, comprising:
a printing unit for forming and printing a visible image on said printing medium; and
an IC tag reader for establishing data communication with an ultra-small integrated circuit (IC) tag carried by said printing medium and storing information for exchanging storing information or information stored in said IC tag and other tag information, wherein
a pattern having a machine-identifiable format to present access information that is the key information necessary for accessing said IC tag for the stored information is printed on said medium carrying the IC tag to superimpose the pattern on said image based on input image information, and the storing information is stored in the IC tag.

6. The image forming device according to Claim 5, wherein said pattern is machine-identifiable but hard for a person to visually identify.

7. The image forming device according to Claim 6, wherein said format has a fine geometry or an almost invisible color.

8. The image forming device according to Claim 5, wherein said pattern has said format to present the access information encrypted, which is decrypted by specific key information.

9. The image forming device according to Claim 5, wherein said stored information indicates information stored in a storage device external to said device.

10. The image forming device according to Claim 5, wherein among the input information to said device, the device stores in said IC tag the classified information itself to which access is limited or at least part of information based on the classified information.

11. The image forming device according to Claim 5, wherein said IC tag reader powers said IC tag wirelessly and establish data communication with said IC tag.

12. The image forming device according to Claim 5, wherein the device detects the IC tag on said medium on which print is made during the printing at the printing unit and, then, said IC tag reader identifies the detected IC tag and stores said storing information or activates said stored information in the IC tag.

13. The image forming device according to Claim 5, wherein
the device further comprises a paper ejection unit for ejecting the printed sheet or said printing medium on which print is made and detecting the ejection; and
the device stores said storing information or activates said stored information in said IC tag after an image presenting said access information is printed and said paper ejection unit detects the ejection of the printed sheet.

14. The image forming device according to Claim 13, wherein the device stores said storing information in said IC tag of said printed sheet by the time said printed sheet is ejected by said paper ejection unit, keeps the storing information stored inactivated until the printed sheet is ejected by said paper ejection unit, and activates the stored information after the ejection of the printed sheet by said paper ejection unit is detected.

15. The image forming device according to Claim 13, wherein said IC tag reader has a directional and other range limitation means for establishing a limited exchangeable range excluding at least said paper ejection unit.

16. An image information input device reading the figures/photographs on a paper, film, or other medium as an image, generating image data thereof, and supplying the data to an information processing device, comprising:
an image sensor for capturing an image of said medium and directly reading the figures/photographs recorded thereon as an image; and
an IC tag reader for establishing data communication with an ultra-small integrated circuit (IC) tag carried by said printing medium and storing information for exchanging storing information or information stored in said IC tag and other tag information, wherein
said IC tag carried by said medium is detected, the pattern having a specific machine-identifiable format is extracted from the image of the figures/photographs on the medium that is captured by said image sensor, the pattern is identified to obtain key information, and said stored information in said IC tag is accessed based on the key information.

17. The image information input device according to Claim 16, wherein said pattern is machine-identifiable but hard for a person to visually identify.

18. The image information input device according to Claim 16, wherein said format has a fine geometry or an almost invisible color.

19. The image information input device according to Claim 16, wherein said pattern has said format to present the access information encrypted, which is decrypted by specific key information.

20. The image forming input device according to Claim 16, wherein said stored information indicates information stored in a storage device external to said device.

21. The image forming input device according to Claim 16, wherein said IC tag reader powers said IC tag wirelessly and establish data communication with said IC tag.

22. The image information input device according to Claim 16, wherein said IC tag reader has a directional and other range limitation means for establishing a limited exchangeable range excluding at least said paper ejection unit.

23. A digital multifunction device having an output function to print and output a visible image based on input image information and other information on a printing paper, film, or other medium for output and an image information input function to read the figures/photographs recorded on a medium as an image and generate and input image data thereof, comprising:
a printing unit for forming and printing a visual image on said printing medium;
an image scanner for capturing an image of said medium and directly reading the figures/photographs recorded thereon as an image; and
an IC tag reader for establishing data communication with an ultra-small integrated circuit (IC) tag carried by said printing medium and storing information for exchanging storing information or information stored in said IC tag and other information, wherein
a pattern having a machine-identifiable format to present access information that is the key information necessary for accessing said IC tag for said stored information is printed on said medium carrying the IC tag to superimpose the pattern on said image based on image information and the storing information is stored in the IC tag during said printing of an image based on input image information, and said IC tag carried by said medium is detected, the pattern having a machine-identifiable format is extracted from the image of the figures/photographs on the medium that is captured by said image scanner, the pattern is identified to obtain key information, and said stored information in said IC tag is accessed based on the key information during said reading of the figures/photographs on a medium.
